# EUROPEAN PATENT SPECIFICATION

(11) **EP 3 411 982 B1**
(45) Date of publication and mention of the grant of the patent: **26.06.2024**
(21) Application number: 16745266.3
(22) Date of filing: 29.06.2016
(51) Int. Cl.: H04L 5/00

(54) **METHOD OF CSI-RS TRANSMISSION IN SPECIAL SUBFRAMES**
VERFAHREN ZUR CSI-RS-ÜBERTRAGUNG IN SPEZIELLEN SUBFRAMES
PROCÉDÉ DE TRANSMISSION DE CSI-RS DANS DES SOUS-TRAMES SPÉCIALES

(30) Priority: 03.02.2016 US 201662290621 P
(43) Date of publication of application: 12.12.2018
(73) Proprietor: Apple Inc., Cupertino, CA 95014 (US)
(72) Inventor: DAVYDOV, Alexei, Nizhny Novgorod 603132 (RU)
(74) Representative: Froud, Christopher Andrew
(86) International application number: PCT/US2016/040156
(87) International publication number: WO 2017/135990

(56) References cited:
- WO-A1-2014/069877
- US-A1- 2015 124 758
- ZTE: "Evaluation and discussion on interference measurement", 3GPP DRAFT; R1-121043_INTERFERENCE_MEASUREMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jeju, Korea; 20120326 - 20120330, 20 March 2012 (2012-03-20), XP050599347, [retrieved on 2012-03-20]

## Description

### TECHNICAL FIELD

This application relates to reference signals used in the Long-Term Evolution standard and, more particularly, the implementation of reference signals for special subframes.

### BACKGROUND

The Evolved Packet Core (EPC) is the core network of advanced mobile communication systems. The EPC allows different radio access technologies (RATs) to operate in an integrated manner. These radio access technologies include first generation wireless Local Area Networks (LANs), second generation (2G) systems, such as Global System for Mobile communication, or GSM, third generation (3G) systems, such as the Universal Mobile Telecommunication System (UMTS), and fourth generation (4G) systems, such as Long Term Evolution (LTE). LTE continues to evolve (LTE-Advanced, LTE-A) and many new features are referred to as fifth generation (5G) technology.

Under LTE and LTE-A, a User Equipment (UE) connects to the EPC over the LTE access network known as E-UTRAN (short for Evolved UMTS Terrestrial Radio Access Network) and communicates with a base station known as the Evolved NodeB (eNB), which may physically consist of multiple base stations and/or radio heads. The EPC is a packet-switched network in which the Internet Protocol is used for all transport services. The EPC is part of the 3^{rd} Generation Partnership Project (3GPP) specification.

In 3GPP LTE, both downlink and uplink transmissions employ an Orthogonal Frequency Division Multiplexing (OFDM) transmission scheme. Within OFDM, transmissions may employ either Frequency Division Duplex (FDD) or Time Division Duplex (TDD) modes of operation and may use different Orthogonal Frequency Division Multiple Access (OFDMA) technology in the downlink and Single Carrier Frequency Division Multiple Access (SC-FDMA) technology in the uplink. Both FDD and TDD transmissions are described in terms of a radio frame having subframes. Reference signals, of which there are several types in LTE, are disposed along the radio frame at predefined locations in the subframe.

Under TDD, one or more of the subframes is known as a special subframe (with the other subframes sometimes being referred to as normal subframes). The special subframe has a downlink part that is smaller than a normal subframe. In LTE-A, some of the reference signal predefined locations are adjusted for the special subframe. However, the adjustment causes either collisions with other reference signals or unavailability to the downlink portion of the special subframe.

So far, collision between two types of reference signals, Channel State Information Reference Signals (CSI-RS) and Demodulation Reference Signals (DM-RS), and transmission of CSI-RS antenna ports outside the special subframe, are not addressed in the RAN1 specification.

WO 2014/069877 A1 describes configuring a reference signal in a wireless communication system supporting multiple carriers.

Thus, there is a continuing need for a solution that addresses the shortcomings of the prior art.

### BRIEF DESCRIPTION OF THE DRAWINGS

The foregoing aspects and many of the attendant advantages of this document will become more readily appreciated as the same becomes better understood by reference to the following detailed description, when taken in conjunction with the accompanying drawings, wherein like reference numerals refer to like parts throughout the various views, unless otherwise specified.
Figure 1 is an illustration of an FDD LTE radio frame for a 1.4 MHz bandwidth transmission;
Figures 2A and 2B are illustrations of FDD and TDD LTE frame structures, respectively;
Figure 3 illustrates possible resource element assignments for different CSI-RS patterns (CSI-RS configurations) for normal subframes;
Figures 4A - 4F illustrate possible CSI-RE pairs for one or two CSI- RS antenna ports, four CSI-RS antenna ports, and eight CSI-RS antenna ports, for both normal subframes and special subframes;
Figure 5 is an illustration of CSI-RS patterns corresponding to one or two CSI-RS antenna ports, along with other reference signals, for a downlink special subframe;
Figure 6 is an illustration of DM-RS patterns for special subframe configurations 1, 2, 6, or 7;
Figure 7 illustrates a first problem with CSI-RS transmission in DwPTS in which collision between CSI-RS and DM-RS occurs, according to some embodiments;
Figure 8 illustrates a second problem with CSI-RS transmission in DwPTS in which CSI-RS are outside the DwPTS region, according to some embodiments;
Figure 9 is a simplified block diagram of a method of CSI-RS transmission in special subframes including several embodiments, according to some embodiments;
Figures 10A - 10C illustrate a first solution to the first problem identified in Figure 7, performed by the method of CSI-RS transmission of Figure 9, where the solution is illustrated for one or two antenna ports, four antenna ports, and eight antenna ports, respectively, according to some embodiments;
Figures 11A - 11C illustrate a second solution to the first problem identified in Figure 7, performed by the method of CSI-RS transmission of Figure 9, where the solution is illustrated for one or two antenna ports, four antenna ports, and eight antenna ports, respectively, according to some embodiments;
Figures 12A - 12 illustrate a third solution to the first problem identified in Figure 7, performed by the method of CSI-RS transmission of Figure 9, where the solution is illustrated for one or two antenna ports, four antenna ports, and eight antenna ports, respectively, according to some embodiments;
Figures 13A - 13C illustrates a first solution to the second problem identified in Figure 8, performed by the method of CSI-RS transmission of Figure 9, where the solution is illustrated for one or two antenna ports, four antenna ports, and eight antenna ports, respectively, according to some embodiments;
Figures 14A - 14C illustrates a second solution to the second problem identified in Figure 8, performed by the method of CSI-RS transmission of Figure 9, where the solution is illustrated for one or two antenna ports, four antenna ports, and eight antenna ports, respectively, according to some embodiments;
Figures 15A- 15C illustrates a third solution to the second problem identified in Figure 8, performed by the method of CSI-RS transmission of Figure 9, where the solution is illustrated for one or two antenna ports, four antenna ports, and eight antenna ports, respectively, according to some embodiments;
Figures 16A - 16C illustrates a fourth solution to the second problem identified in Figure 8, performed by the method of CSI-RS transmission of Figure 9, where the solution is illustrated for one or two antenna ports, four antenna ports, and eight antenna ports, respectively, according to some embodiments; and
Figure 17 is a simplified block diagram of a UE capable of implementing the method of CSI-RS transmission of Figure 9, according to some embodiments.

### DETAILED DESCRIPTION

The invention is as set out in the claims. Any embodiment described herein which does not fall within the scope of the claims does not form a part of the invention.

In accordance with the embodiments described herein, a method of implementing Channel State Information Reference Signals (CSI-RS) in downlink special subframes is disclosed. CSI-RS occupy predefined resource elements (REs) of a subframe, but for special subframes (which are used in Time-Division Duplexing), the predefined REs are shifted because the downlink portion of the special subframe does not occupy the entire subframe. The shift of CSI-RS can cause one of two problems: collision with Demodulation Reference Signals (DM-RS) and transmission of CSI-RS outside the downlink portion of the special subframe. The method of implementing CSI- RS in downlink special subframes provides several possible solutions to these two problems.

In the following detailed description, reference is made to the accompanying drawings, which show by way of illustration specific embodiments in which the subject matter described herein may be practiced. However, it is to be understood that other embodiments will become apparent to those of ordinary skill in the art upon reading this disclosure. In other instances, well-known structures, materials, or operations are not shown or described in detail to avoid obscuring aspects of the disclosure. The following detailed description is, therefore, not to be construed in a limiting sense, as the scope of the subject matter is defined by the claims.

A resource block is a time/frequency/space construct used to illustrate the "physical resource" of an OFDM transmission. Each row corresponds to one OFDM subcarrier and each column corresponds to an OFDM symbol. The spatial dimension is indicated using two or more antenna ports, one for each "layer" of the resource block. For 3GPP LTE, the resource block time/frequency/space size is six (or seven) symbols by twelve subcarriers (twelve consecutive subcarriers in the frequency domain and one 0.5 ms slot in the time domain) by the number of antenna ports.

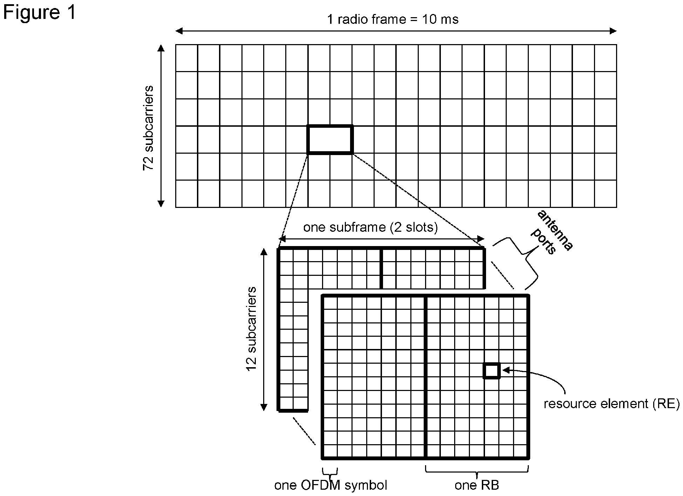

Figure 1 is an illustration of an FDD LTE radio frame for a 1.4 MHz bandwidth transmission. A single radio frame (10 ms in duration) is subdivided into ten subframes (of 1 ms duration each) in the time domain and six subframes in the frequency domain. Each subframe is further subdivided into two slots (.5 ms in duration), also known as resource blocks (RBs). Each RB consists of twelve subcarriers by, in this example, seven OFDM symbols.

The smallest unit of the subframe is a resource element (RE) having a dimension of one subcarrier (frequency) for a duration of one symbol (time). In the example of Figure 1, each subframe RB thus consists of 84 REs. In the spatial dimension, the number of REs is further multiplied by the number of antenna ports.

### Reference Signals under LTE

Downlink reference signals are used in LTE for different purposes and consist of multiple reference symbols occupying specific resource elements within the radio frame. Terminals (UEs) use cell-specific reference signals (CRS) for channel estimation for coherent demodulation of downlink physical channels. CRS are also used for obtaining Channel State Information (CSI), for cell selection and for handover.

Under LTE-A, new reference signals are defined to split up the channel estimation and CSI acquisition operations. Demodulation reference signals (DM-RS) are used for channel estimation and CSI reference signals (CSI-RS) are used to acquire CSI. DM-RS are higher-density on the radio frame than CSI-RS and are only transmitted when there is data to transmit, while CSI-RS occur with less frequency. CSI-RS are more efficient than CRS for deriving CSI for multiple network nodes and antenna ports.

Also known as UE-specific reference signals, DM-RS are used for channel estimation for coherent demodulation of one or more physical channels, for example, the Physical Downlink Shared Channel (PDSCH) and the Enhanced Physical Downlink Control Channel (EPDCCH). A predefined DM-RS is designated for each UE, enabling the UE to perform channel estimation. DM-RS are transmitted within the resource block specifically assigned for PDSCH/EPDCCH transmission to a given terminal.

Introduced in LTE Release 10, CSI-RS are used by terminals to acquire CSI, which consists of Channel Quality Indicator (CQI), Precoding Matrix Indicator (PMI), Precoding Type Indicator (PTI), and Rank Indicator (RI). CSI-RS symbols making up the CSI-RS signal are transmitted in every resource block of the frequency domain. In the time domain, CSI-RS can be transmitted with different periodicity, such as every 5 ms (twice a frame), every 1 ms (every frame), and so on up to every eighth frame (80 ms).

The antenna ports used for CSI-RS are different than those corresponding to DM-RS. CSI-RS antenna ports typically correspond to actual transmit antennas while DM-RS antenna ports may include antenna precoding at the eNB. Despite the fact that the DM-RS occupy different antenna ports than the CSI-RS, interference between them can still occur.

### TDD and FDD

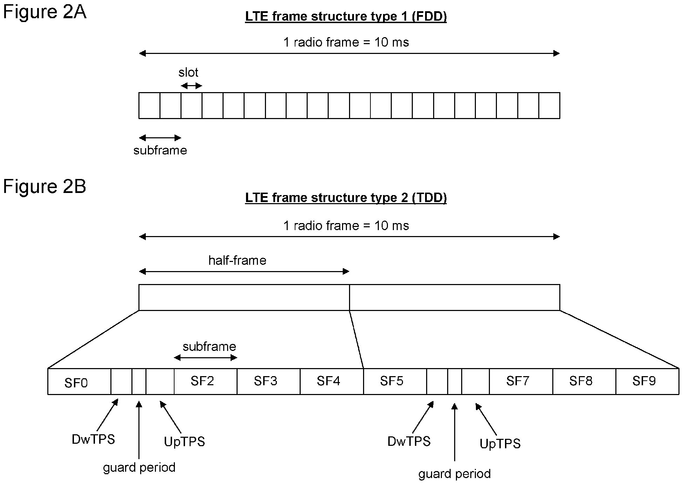

Time Division Duplexing (TDD) and Frequency Division Duplexing (FDD) are two types of full duplexing that enable uplink and downlink transmissions. The FDD radio frame (type 1) is illustrated in Figure 2A and the TDD radio frame (type 2) is illustrated in Figure 2B. In FDD, downlink transmissions happen at one carrier frequency while uplink transmissions happen at a different carrier frequency. In frame structure type 2 (TDD), the radio frame is also 10 ms, and there are again ten subframes, but there is a single carrier frequency. Further, some subframes are used for downlink transmissions while others are used for uplink transmissions. At least one of the subframes is known as a special subframe.

Seven different TDD downlink/uplink configurations are defined in LTE, as shown in Table 1. For each uplink/downlink configuration, the ten subframes (Figure 2B) are indicated as being either a downlink subframe (D), an uplink subframe (U), or a special subframe (S). UL/DL configurations having a switching periodicity of 5 ms have two special subframes (one in each half-frame) while those having a switching periodicity of 10 ms have a single special subframe. Subframes 0 and 5 and the downlink portion of the special subframe (DwPTS) are reserved for downlink transmission. The uplink portion of the special subframe (UpPTS) and the subframe immediately following the special subframe are reserved for uplink transmission.

**Table 1. LTE TDD DL/UL subframe configuration**

| UL/DL cfg | DL-to-UL switch periodicity | subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

As shown in Figure 2B, the special subframe consists of a Downlink Pilot Time Slot (DwPTS), an Uplink Pilot Time Slot (UpPTS), and a guard period disposed in between. The size of the three portions is configurable.

Since the same carrier frequency is used for both downlink and uplink transmissions in TDD, the special subframe enables the eNB and the UE to switch between uplink and downlink transmissions (and vice-versa).

### CSI-RS mapping

The CSI-RS pattern (CSI-RS configuration) conveys information on the REs of the downlink subframe, which is used to transmit CSI-RS signals corresponding to different CSI-RS antenna ports. A CSI-RS pattern for a given UE consists of a minimum of two and up to eight different CSI-RS REs, thus supporting up to eight-layer spatial multiplexing. A pair of REs that is part of a CSI-RS pattern is used to transmit a CSI-RS antenna port. In the proposed solutions described below, a distinction may be made between the CSI-RS pattern and the CSI-RS antenna ports (or corresponding CSI-RS RE pairs) themselves.

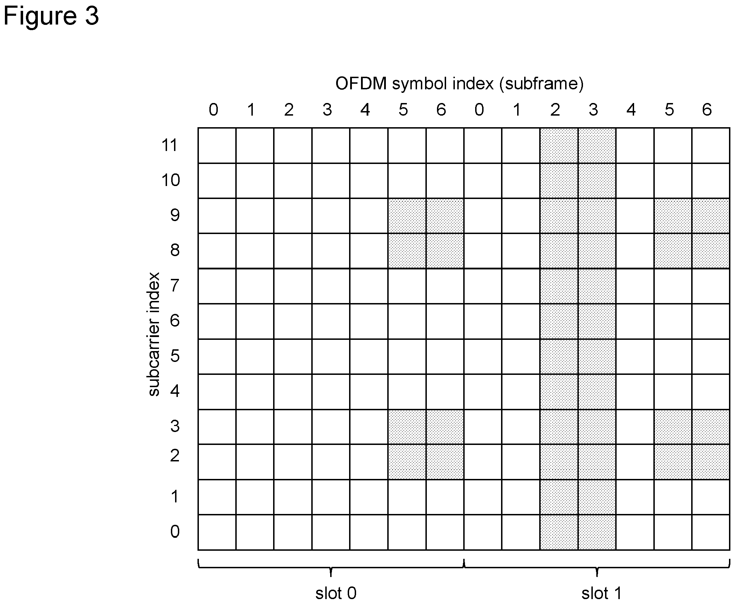

Figure 3 illustrates possible resource element assignments for CSI-RS patterns, made up of CSI-RS antenna ports, in a normal subframe. Figure 3 will be contrasted with the special subframe mapping defined in LTE-A, as explained below. Of the 168 available REs in the subframe (normal cyclic prefix), 40 of them (shaded) are available for CSI-RS. For one or two antenna ports, each CSI-RS pattern occupies two adjacent REs; thus, there are up to twenty available CSI-RS patterns, each one consisting of one or two CSI-RS antenna ports. For four antenna ports, each CSI-RS pattern occupies two pairs of adjacent REs; thus, there are ten available CSI-RS patterns, each one consisting of four CSI-RS antenna ports. For eight antenna ports, each CSI-RS pattern occupies four pairs of adjacent REs; thus, there are five possible configurations, each one consisting of eight CSI-RS antenna ports. Other elements that share the subframe with the CSI-RS, such as DM-RS, CRS ports, and the PDSCH, are not shown in Figure 3.

It is also possible to configure a UE with a set of zero-power CSI-RS resources, also known as "muted RE". Zero-power CSI-RS refers to a CSI-RS whose REs are silent, that is, no signal is transmitted on the muted RE. In other words, no transmitted signal occurs on those REs. By matching a CSI-RS pattern in one cell with a corresponding zero-power CSI-RS pattern in interfering cells, the Signal to Interference-plus-Noise Ratio (SINR) is increased. Both Coordinated Multi-Point (CoMP) and heterogeneous deployments benefit from using zero-power CSI-RS. Other CSI-RS can be referred to also as non-zero-power (NZP) CSI-RS.

In Release 13 Full-Dimensional (FD) Multiple-Input-Multiple-Output (MIMO), support of Non-Zero Power (NZP) CSI-RS resource is introduced in the DwPTS portion of the special subframe. The CSI-RS pattern for NZP CSI-RS in DwPTS is based on the time-shifted version of CSI-RS patterns of normal subframes. More specifically, the CSI-RS pattern for DwPTS is obtained from the conventional CSI-RS pattern (e.g., Figure 3) by shifting the pattern by three OFDM symbols to the beginning of the DL subframe.

Table 2 (from Table 6.10.5.2-1 of the 3GPP TS 36.211 v.13.0.1) illustrates a mapping from CSI reference signal configuration to (*k'*,*l'*) for normal cyclic prefix, where k' denotes the subframe, *l'* denotes the OFDM symbol, and *nₛ* denotes the slot number, (*nₛ*^{'} = *nₛ* mod 2). The first twenty CSI-RS patterns (denoted 0 - 19) are available for both frame structure type 1 (FDD) and frame structure type 2 (TDD) while the remaining CSI-RS patterns (20 - 31) and configurations for special subframes are available only for TDD.

**Table 2. Mapping from CSI reference signal configuration to (k',l') for normal cyclic prefix**

| CSI-RS config. | number of CSI reference signals configured | | | | | | | | | | | |
|---|---|---|---|---|---|---|---|---|---|---|---|---|
| | 1 or 2 | | | | 4 | | | | 8 | | | |
| | normal subframe | | special subframe | | normal subframe | | special subframe | | normal subframe | | special subframe | |
| | (*k'*,*l'*) | *n'* | (*k'*,*l'*) | *n'* | (*k'*,*l'*) | *n'* | (*k'*,*l'*) | *n'* | (*k'*,*l'*) | *n'* | (*k'*,*l'*) | *n'* |
| 0 | (9,5) | 0 | (9,5) | 0 | (9,5) | 0 | (9,5) | 0 | (9,5) | 0 | (9,5) | 0 |
| 1 | (11,2) | 1 | (11,5) | 0 | (11,2) | 1 | (11,5) | 0 | (11,2) | 1 | (11,5) | 0 |
| 2 | (9,2) | 1 | (9,2) | 1 | (9,2) | 1 | (9,2) | 1 | (9,2) | 1 | (9,2) | 1 |
| 3 | (7,2) | 1 | (7,5) | 0 | (7,2) | 1 | (7,5) | 0 | (7,2) | 1 | (7,5) | 0 |
| 4 | (9,5) | 1 | | | (9,5) | 1 | | | (9,5) | 1 | | |
| 5 | (8,5) | 0 | (8,5) | 0 | (8,5) | 0 | (8,5) | 0 | | | | |
| 6 | (10,2) | 1 | (10,5) | 0 | (10,2) | 1 | (10,5) | 0 | | | | |
| 7 | (8,2) | 1 | (8,2) | 1 | (8,2) | 1 | (8,2) | 1 | | | | |
| 8 | (6,2) | 1 | (6,5) | 0 | (6,2) | 1 | (6,5) | 0 | | | | |
| 9 | (8,5) | 1 | | | (8,5) | 1 | | | | | | |
| 10 | (3,5) | 0 | (3,5) | 0 | | | | | | | | |
| 11 | (2,5) | 0 | (2,5) | 0 | | | | | | | | |
| 12 | (5,2) | 1 | (5,5) | 0 | | | | | | | | |
| 13 | (4,2) | 1 | (4,5) | 0 | | | | | | | | |
| 14 | (3,2) | 1 | (3,2) | 1 | | | | | | | | |
| 15 | (2,2) | 1 | (2,2) | 1 | | | | | | | | |
| 16 | (1,2) | 1 | (1,5) | 0 | | | | | | | | |
| 17 | (0,2) | 1 | (0,5) | 0 | | | | | | | | |
| 18 | (3,5) | 1 | | | | | | | | | | |
| 19 | (2,5) | 1 | | | | | | | | | | |
| 20 | (11,1) | 1 | | | (11,1) | 1 | | | (11,1) | 1 | | |
| 21 | (9,1) | 1 | | | (9,1) | 1 | | | (9,1) | 1 | | |
| 22 | (7,1) | 1 | | | (7,1) | 1 | | | (7,1) | 1 | | |
| 23 | (10,1) | 1 | | | (10,1) | 1 | | | | | | |
| 24 | (8,1) | 1 | | | (8,1) | 1 | | | | | | |
| 25 | (6,1) | 1 | | | (6,1) | 1 | | | | | | |
| 26 | (5,1) | 1 | | | | | | | | | | |
| 27 | (4,1) | 1 | | | | | | | | | | |
| 28 | (3,1) | 1 | | | | | | | | | | |
| 29 | (2,1) | 1 | | | | | | | | | | |
| 30 | (1,1) | 1 | | | | | | | | | | |
| 31 | (0,1) | 1 | | | | | | | | | | |

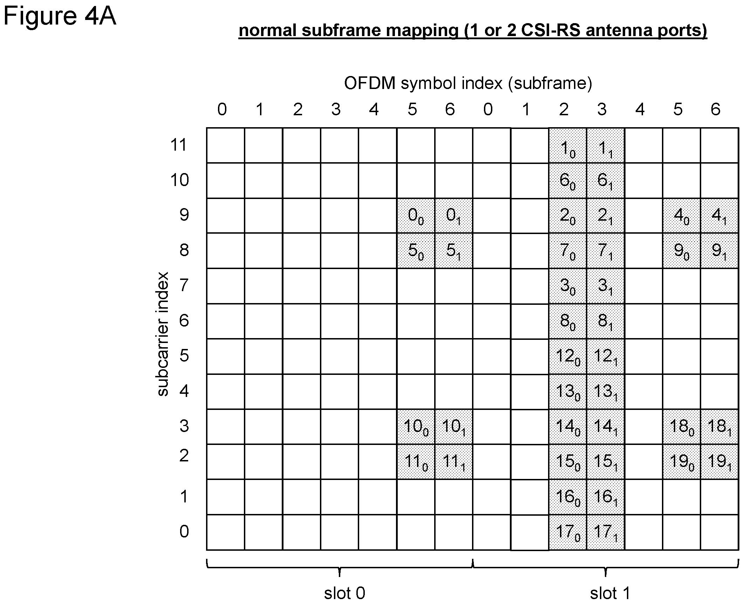

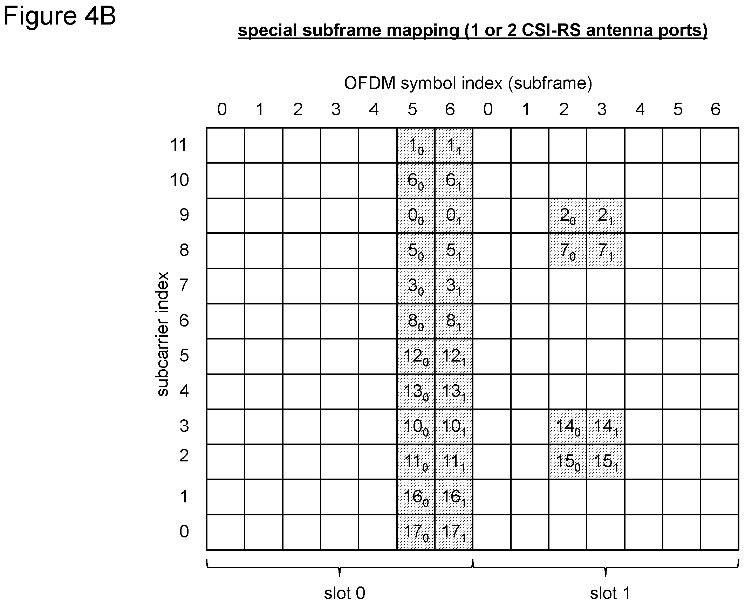

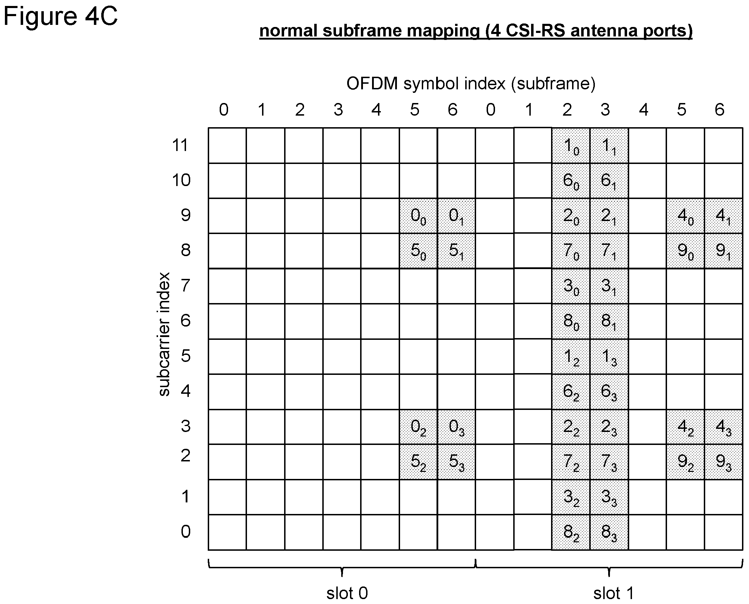

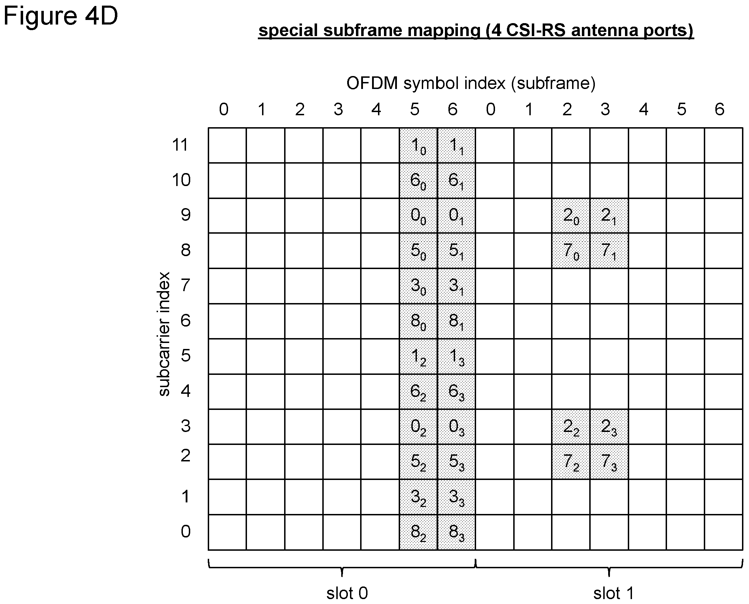

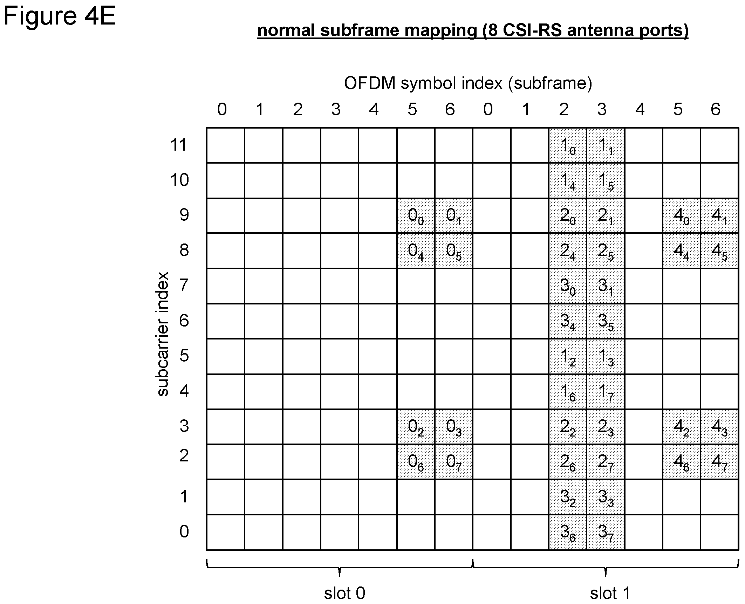

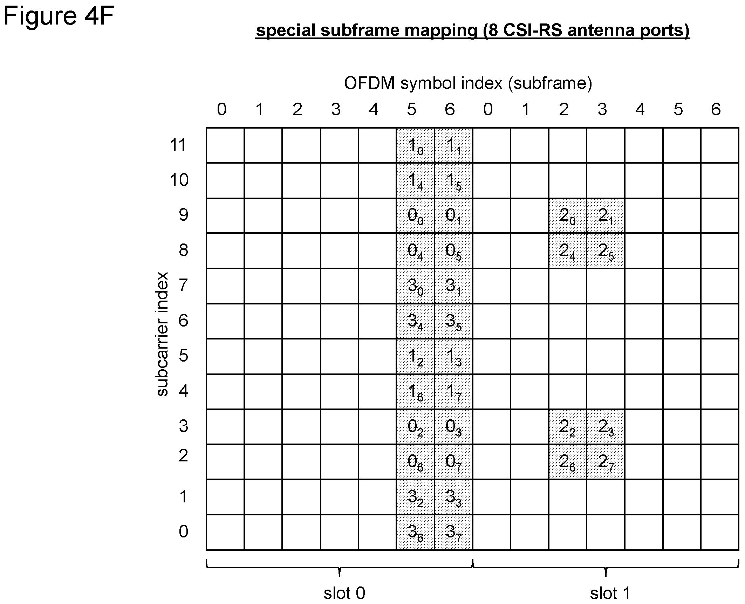

Figures 4A - 4F are CSI-RS mappings based on Table 2, CSI-RS patterns 0 - 19, and illustrate the shift between normal subframes and special subframes. Figures 4A, 4C, and 4E illustrate normal subframe mapping for one or two CSI-RS antenna ports, four CSI-RS antenna ports, and eight CSI-RS antenna ports, respectively; Figures 4B, 4D, and 4F illustrate special subframe mapping for one or two CSI-RS antenna ports, four CSI-RS antenna ports, and eight CSI-RS antenna ports, respectively. CSI-RS mappings are shaded REs indicated by the CSI-RS pattern number from Table 2.

Each table entry indicates the location of the first RE making up the RE pair of the CSI-RS, with succeeding REs being at a predefined offset from the indicated location. Thus, CSI-RS pattern 0 indicates a (k',l') of "(9,5)" and a n' of "0" for a normal subframe. Accordingly, Figure 4A shows that CSI-RS pattern 0 has an RE at location (9,5) of slot 0, indicated with "0₀" and an adjacent RE at location (9,6) of slot 0, indicated with "0₁". This is the first of twenty available RE pairs making up the first twenty CSI-RS patterns, denoted 0 - 19.

In contrast to the normal subframe mapping of Figure 4A, Figure 4B shows special subframe mapping, also for one or two CSI-RS antenna ports. Table 2 indicates fewer special subframe configurations than for normal subframes. CSI-RS patterns 0 - 3, 5 - 8, and 10 - 17 are illustrated. The shaded RE positions are left-shifted, relative to the REs in Figure 4A.

Figures 4C and 4D show the CSI-RS patterns in Table 2 for normal and special subframes, respectively, this time for four CSI-RS antenna ports. Each configuration is given by two sets of adjacent RE pairs, denoted with subscripts "0", "1", "2", and "3". CSI-RS pattern 2, for both normal (Figure 4C) and special (Figure 4D) subframes, thus consists of REs at locations (9,2), (9,3), (3,2), and (3,3) of slot 1, with the entry in Table 2 indicating only the location of the first RE and all other REs being located at predefined offsets. For normal subframes, there are now ten available CSI-RS patterns (0 - 9) for both FDD and TDD, plus six additional CSI-RS patterns (20 - 25) for TDD only (not shown), while, for special subframes, there are eight available CSI-RS patterns (0 - 3 and 5 - 8).

Figures 4E and 4F show the CSI-RS patterns in Table 2 for normal and special subframes, respectively, for eight CSI-RS antenna ports. Each configuration is given by four sets of adjacent RE pairs, denoted with subscripts "0" - "7". Thus, for both normal (Figure 4E) and special (Figure 4F) subframes, CSI-RS pattern 3 consists of REs at locations (7,2), (7,3), (1,2), (1,3), (6,2), (6,3), (0,2), and (0,3) of slot 1. As shown in Table 2, for normal subframes, there are five available CSI-RS patterns (0 - 4) for both FDD and TDD, plus three additional CSI-RS patterns (20 - 22) for TDD (not shown), and for special subframes, there are four available CSI-RS patterns (0 - 3).

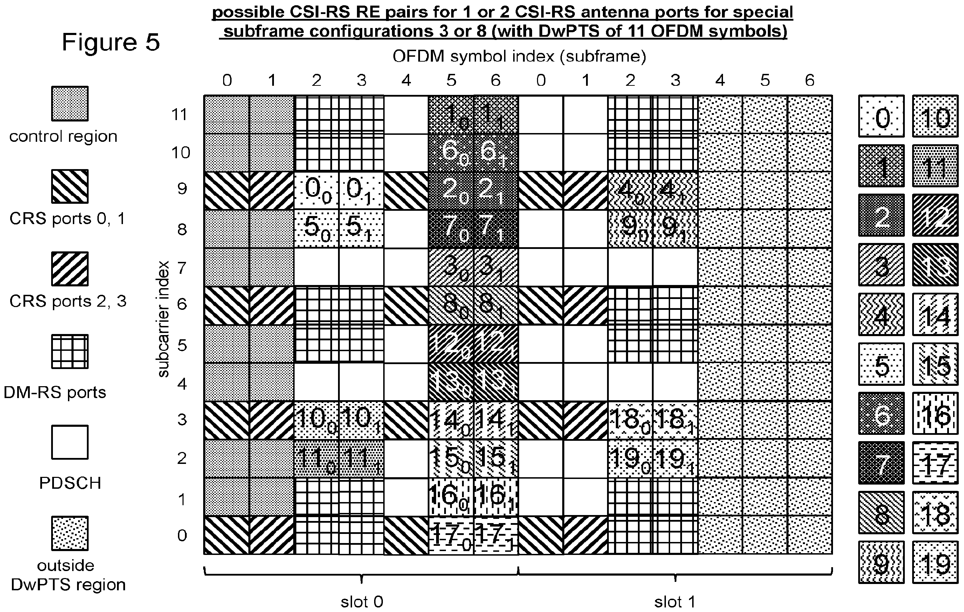

Figure 5 is an illustration of CSI-RS patterns corresponding to one or two CSI-RS antenna ports for downlink special subframe configurations 3 or 8. A more complete explanation of special subframe configurations is given below. For now, it is sufficient to know that, for special subframe configurations 3 and 8, there are 11 OFDM symbols in the DwPTS portion, with the remaining three OFDM symbols being reserved for the UpPTS and the guard period.

Figure 5 features mappings of reference signals other than CSI-RS as well as PDSCH. Included in Figure 5 are a control region (gray), CRS ports 0 and 1 (right diagonal stripe), CRS ports 2 and 3 (left diagonal stripe), DMRS ports (checkerboard), and PDSCH (white), and REs outside the DwPTS region (zig-zag), as well as twenty possible CSI-RS patterns (each pair uniquely shaded and numbered as indicated).

Table 3 features ten special subframe configurations (SSC), the first nine (0 - 8) of which are supported in LTE Releases 8, 9, and 10, while the tenth SSC (9) is from LTE Release 11. (Table 3 is taken from Table 4.2-1 of the 3GPP TS 36.211 v. 13.)

**Table 3. Configuration of special subframe (lengths of DwPTS/GP/UpPTS)**

| SSC | normal cyclic prefix in downlink | | | extended cyclic prefix in downlink | | |
|---|---|---|---|---|---|---|
| | DwPTS | UpPTS | | DwPTS | UpPTS | |
| | | normal cyclic prefix in uplink | extended cyclic prefix in uplink | | normal cyclic prefix in uplink | extended cyclic prefix in uplink |
| 0 | 6592 * *Tₛ* | 2192 * *Tₛ* | 2560 * *Tₛ* | 7680 * *Tₛ* | 2192 * *Tₛ* | 2560 * *Tₛ* |
| 1 | 19760 * *Tₛ* | | | 20480 * *Tₛ* | | |
| 2 | 21952 * *Tₛ* | | | 23040 * *Tₛ* | | |
| 3 | 24144 * *Tₛ* | | | 25600 * *Tₛ* | | |
| 4 | 26336 * *Tₛ* | | | 7680 * *Tₛ* | 4384 * *Tₛ* | 5120 * *Tₛ* |
| 5 | 6592 * *Tₛ* | 4384 * *Tₛ* | 5120 * *Tₛ* | 20480 * *Tₛ* | | |
| 6 | 19760 * *Tₛ* | | | 23040 * *Tₛ* | | |
| 7 | 21952 * *Tₛ* | | | 12800 * *Tₛ* | | |
| 8 | 24144 * *Tₛ* | | | - | - | - |
| 9 | 13168 * *Tₛ* | | | - | - | - |

In Table 3, *Tₛ* indicates the minimum time unit in which one frame, 10 ms, equals 307,200 * *Tₛ*. The total length of the special subframe, consisting of DwPTS + GP + UpPTS, thus equals 30,720 * *Tₛ*, or 1 ms, with fourteen OFDM symbols in all. The size of the DwPTS, GP, and UpPTS in the special subframe may thus be different, depending on the special subframe configuration.

**Table 4. Configuration of special subframe (number of OFDM symbols for DwPTS/GP/UpPTS)**

| SSC | normal cyclic prefix in downlink | | |
|---|---|---|---|
| | DwPTS | UpPTS | |
| | | normal cyclic prefix in uplink | extended cyclic prefix in uplink |
| 0 | 3 | 1 | 1 |
| 1 | 9 | | |
| 2 | 10 | | |
| 3 | 11 | | |
| 4 | 12 | | |
| 5 | 3 | 2 | 2 |
| 6 | 9 | | |
| 7 | 10 | | |
| 8 | 11 | | |
| 9 | 6 | | |

Table 4 shows the ten special subframe configurations again, this time expressing the DwPTS and UpPTS in terms of OFDM symbols, for normal cyclic prefix in the downlink. Once the DwPTS and UpPTS are summed, the guard period can be derived by subtracting the DwPTS' and UpPTS' sizes from the number fourteen.

Thus, looking at normal cyclic prefix in both the downlink and the uplink, for SSC 0, the DwPTS is 3 OFDM symbols, the UpPTS is 1 OFDM symbol, and the guard period is 10 OFDM symbols (14 total). For SSC 2, the DwPTS is 10 OFDM symbols, the UpPTS is 1 OFDM symbols, and thus the guard period is 3 OFDM symbols. SSCs 2 and 7 have the same size DwPTS but different sized UpPTS; this is true for SSCs 1 and 6 as well.

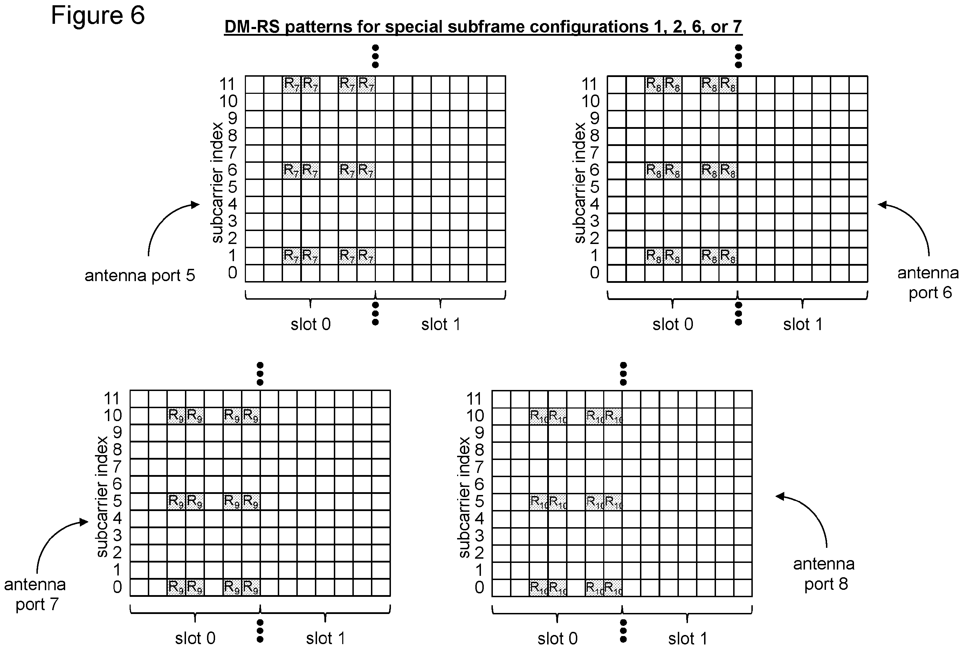

DM-RS patterns may also change, depending on the special subframe type. The example of DM-RS patterns for SSCs 1, 2, 6, or 7 is shown in Figure 6. There are twelve DM-RS reference symbols within a resource block pair that make up the DM-RS pattern (signal), with the shaded REs denoted with R₇, R₈, R₉, and R₁₀, occupying four different antenna ports. DM-RS symbols (R₇) in antenna port 5 occupy the same locations as DM-RS symbols (R₈) in antenna port 6; similarly, DM-RS symbols (R₉) in antenna port 7 occupy the same locations as DM-RS symbols (R₁₀) in antenna port 8. DM-RS symbols R₉ and R₁₀ are downshifted one subcarrier index from DM-RS symbols R₇ and R₈. (Interference between DM-RS symbols occupying the same RE locations are resolved using Orthogonal Cover Codes.)

From Table 4, it is known that SSCs 1 and 6 have a DwPTS of 9 OFDM symbols and SSCs 2 and 7 have a DwPTS of 10 OFDM symbols. Thus, all DM-RS symbols making up the DM-RS signal are within the DwPTS region.

In Figure 6, the position of the DM-RS in OFDM symbols 2 and 3 of slot 0 are similar to the DM-RS (checkerboard) in Figure 5. The position of the DM-RS in OFDM symbols 5 and 6 of slot 0, however, is different than in Figure 5, where the DM-RS are in OFDM symbols 2 and 3 of slot 1. This is because SSCs 3 and 8 have a DwPTS of 11 OFDM symbols while SSCs 1 and 6 have a DwPTS of 9 OFDM symbols and SSCs 2 and 7 have 10 OFDM symbols. If the DM-RS pattern is left intact, as in Figure 5, some of the DM-RS symbols making up the pattern will be outside the DwPTS.

Thus, for some SSCs, the DM-RS may be left-shifted so that the symbols making up the DM-RS pattern are not "outside" the DwPTS. This is because the OFDM symbols making up the special subframe are shared between DwPTS, UpPTS, and the guard period. If the DM-RS are positioned in OFDM symbols beyond those allocated to the DwPTS, the DM-RS are not available to assist with downlink transmissions.

From the above, it is therefore known that, for special subframe configurations, the time-shifted version of the CSI-RS and the adjustments of the DM-RS for special subframes, described above, results in two issues:
- Collision of CSI-RS antenna ports with DM-RS antenna ports.
- Transmission of the CSI-RS antenna ports outside the DwPTS region.
Each of these issues is described in more detail below.

### Problem 1: Collision of CSI-RS antenna ports with DM-RS

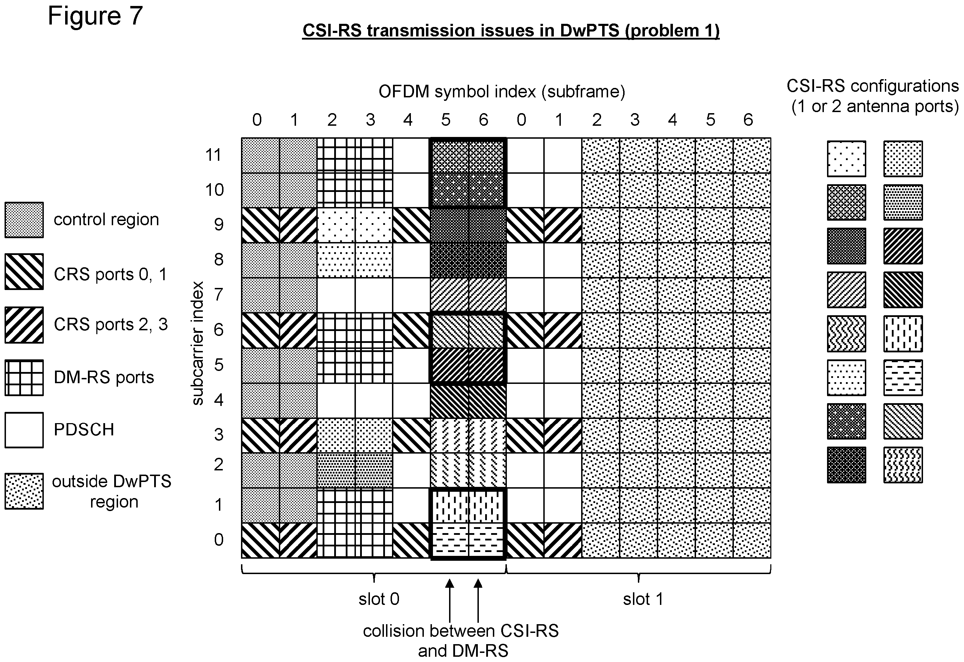

With the repositioning of the CSI-RS and the DM-RS for special subframes, as described above, a conflict arises with the DM-RS patterns. More specifically, the DM-RS in OFDM symbol positions 2 and 3 do not collide with the CSI-RS, but the DM-RS in OFDM symbol positions 5 and 6 do collide with the CSI-RS. This issue is illustrated in Figure 7, according to some embodiments. The area of conflict is indicated with thick black lines, located within the two OFDM symbols 5 and 6.

### Problem 2: Transmission of the CSI-RS antenna ports outside the DwPTS region of the special subframe

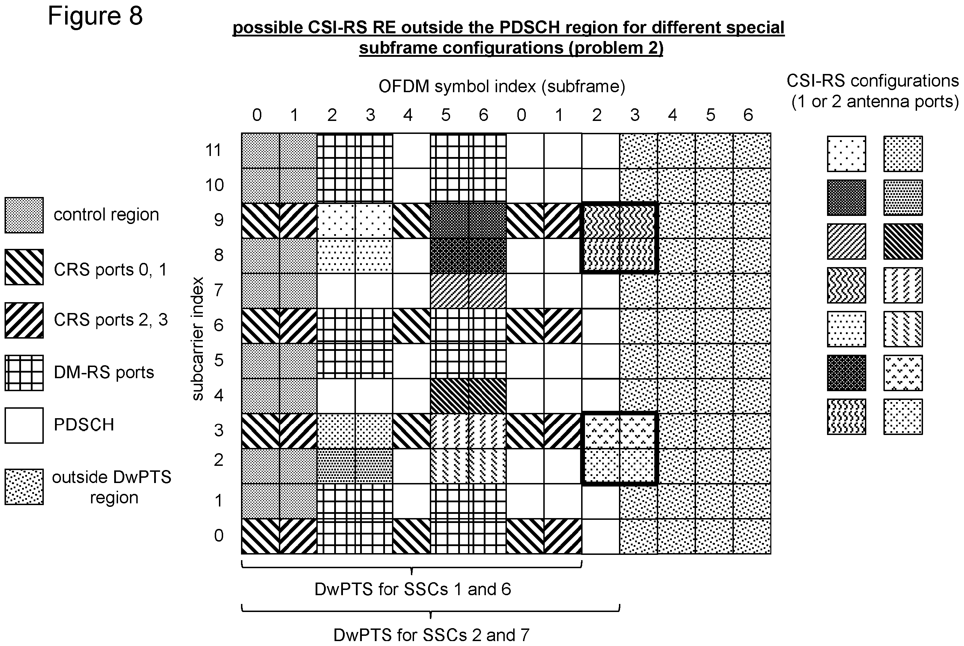

In addition to collision between DM-RS and CSI-RS, there is also a problem with transmission of the CSI-RS antenna ports outside the DwPTS region. Figure 8 illustrates this problem, according to some embodiments. SSCs 1, 2, 6, and 7 are illustrated; however, this problem may arise with other SSCs. Again, thick black lines are indicated in Figure 8 to show the CSI-RS antenna ports that are outside the DwPTS region of the special subframe.

Recall from Tables 3 and 4 that the OFDM distribution between DwPTS, UpPTS, and the guard period in special subframes can be modified. Take SSCs 1 and 6 for example. Both configurations have a DwPTS of 9 OFDM symbols. Thus, the CSI-RS indicated with the thick black lines would be outside the assigned DwPTS region and unavailable for downlink transmissions in the special subframe.

With special subframe configurations 2 and 7, there is also a problem. Both configurations have a DwPTS of 10 OFDM symbols. This means that only half of the CSI-RS will be available for downlink transmissions in the special subframe. This may be characterized as a partial transmission of CSI-RS in OFDM symbols 2 and 3 of slot 1 of the subframe.

### CSI-RS transmission method 100

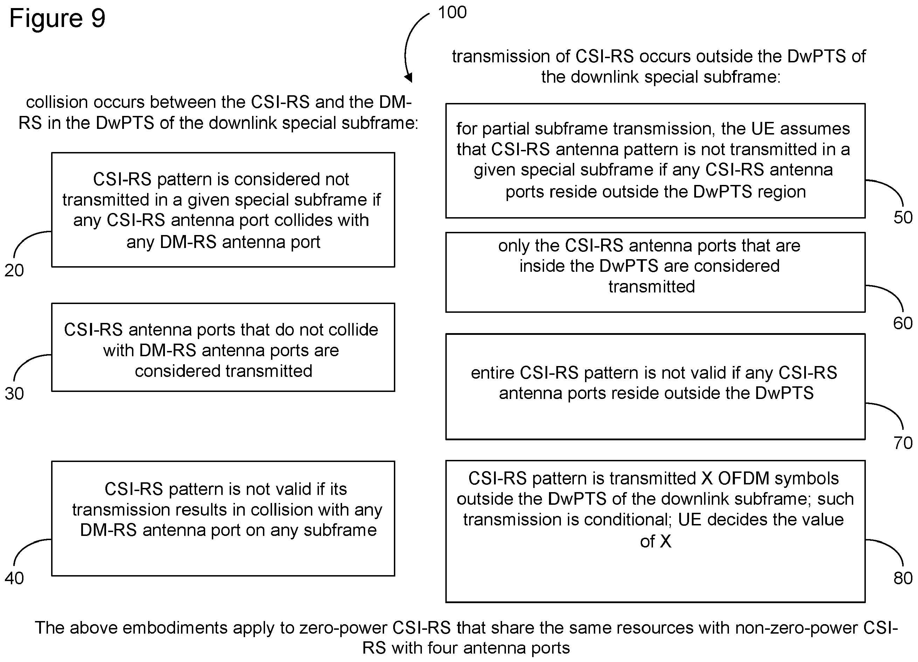

Figure 9 is a simplified block diagram of a method of CSI-RS transmission in downlink special subframes 100, or CSI-RS transmission method 100, according to some embodiments. The CSI-RS method 100 addresses the collision of CSI-RS with DM-RS (embodiments 20, 30, and 40) and partial transmission of the CSI-RS antenna ports (embodiments 50, 60, 70, and 80).

### Collision handling between DM-RS and CSI-RS

In some embodiments, the collision of CSI-RS antenna ports with DM-RS, illustrated in Figure 7, is resolved by defining transmission priority in the UE.

### Solution (20) to collision between DM-RS and CSI-RS

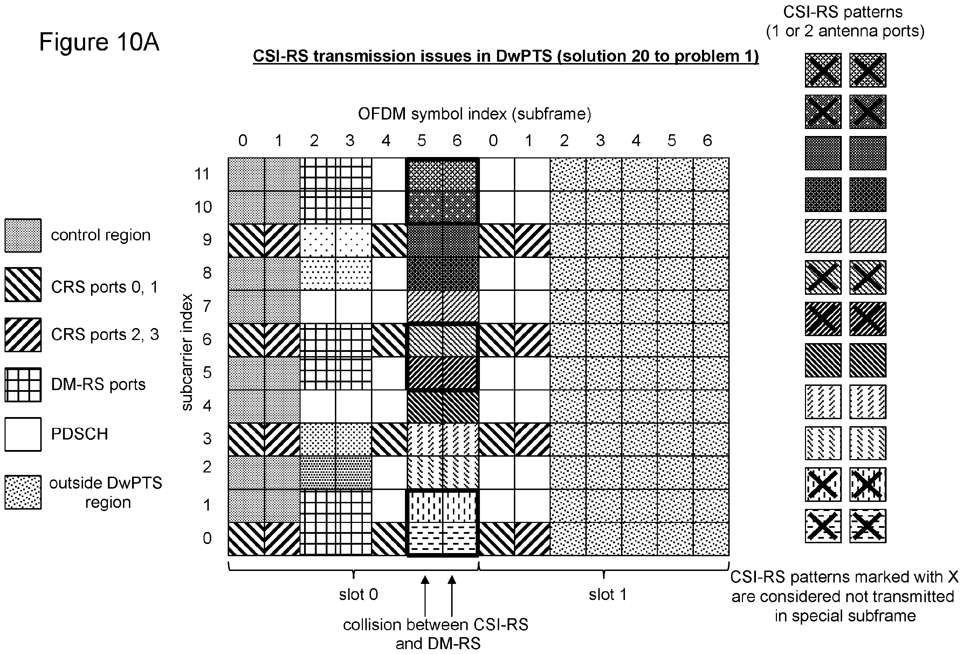

In a solution 20, the CSI-RS pattern is considered not transmitted in a given special subframe if any CSI-RS antenna port would collide with any DM-RS antenna ports. In some embodiments, Figures 10A - 10C illustrate the solution 20, for one or two antenna ports, four antenna ports, and eight antenna ports, respectively.

In Figure 10A, there are twelve CSI-RS patterns occupying OFDM symbols 5 and 6 of the first slot. The six CSI-RS patterns that collide with DM-RS antenna ports are marked with thick black lines. According to the first embodiment 20, these six CSI-RS patterns are considered, by the UE, to have not been transmitted. The six "not transmitted" CSI-RS patterns are marked with an X.

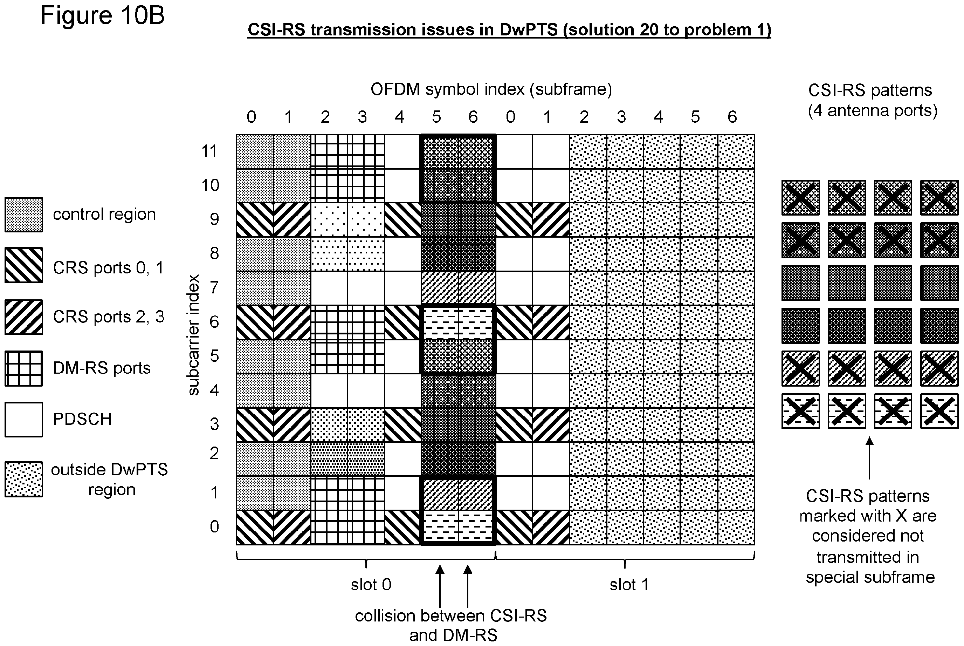

In Figure 10B, there are six possible CSI-RS patterns occupying OFDM symbols 5 and 6 of the first slot. According to the first solution 20, the entire CSI-RS pattern is considered not transmitted if any of the CSI-RS antenna ports making up the pattern are in the region of conflict (indicated with thick black lines). Thus, CSI-RS antenna ports at locations (10,5), (10,6), (4,5), (4,6), in other words, the entire CSI-RS pattern, are considered not transmitted, even though only the first two indicated CSI-RS antenna ports occupy the region of conflict.

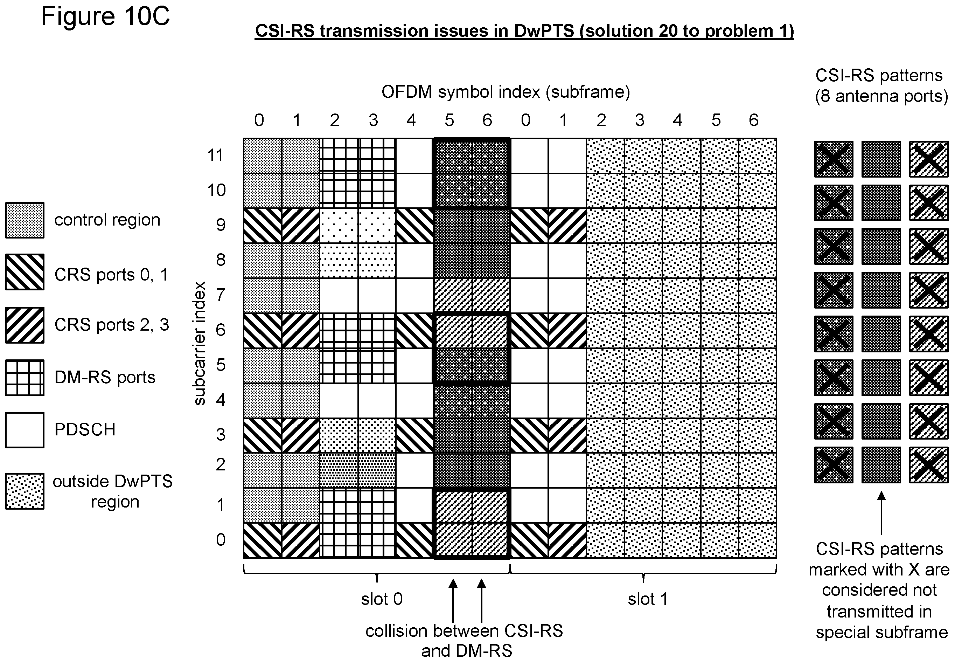

Figure 10C shows a similar result. This time, there are three CSI-RS patterns occupying OFDM symbols 5 and 6 of the first slot. Of these, two CSI-RS patterns are considered not transmitted, even though some of the CSI-RS antenna ports making up these patterns are not in the region of conflict.

In some scenarios, a given CSI-RS pattern could reside either on the normal subframes or on the special subframes. There may be no collision with DM-RS in the normal subframes while there is collision in the special subframes. In some embodiments, for solution 20, where collision between the CSI-RS pattern and DM-RS occurs, the UE assumes that CSI-RS pattern is not transmitted by the eNB in the special subframes but the CSI-RS pattern is transmitted by the eNB in the normal subframes. The distinction between normal and special subframe behavior is not depicted in Figures 10A - 10C, as the figures illustrate only special subframes.

In some embodiments, the DM-RS in OFDM symbols 5 and 6 (not explicitly shown) in each of Figures 10A- 10C are still considered transmitted.

### Solution (30) to collision between DM-RS and CSI-RS

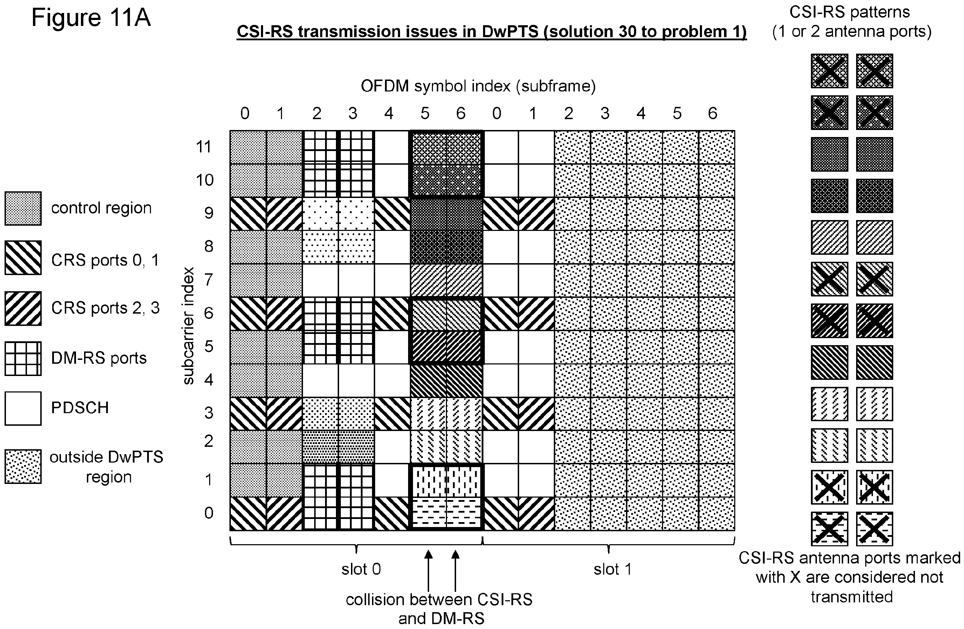

In a solution 30, the UE assumes that only the CSI-RS antenna ports that would not collide with DM-RS are considered as transmitted by the serving cell, in some embodiments. In some embodiments, Figures 11A - 11C illustrate the solution 30, for one or two antenna ports, four antenna ports, and eight antenna ports, respectively.

In Figure 11A, there are twelve CSI-RS patterns occupying OFDM symbols 5 and 6 of slot 0. According to the solution 30, individual CSI-RS antenna ports in the region of conflict (indicated with thick black lines) are considered not transmitted. In the one- or two-antenna port configuration, if CSI-RS antenna port occupies the region of conflict, the other one does as well. Thus, the same six CSI-RS patterns as in Figure 10A are considered not transmitted. The twelve CSI-RS antenna ports marked with an X are considered not transmitted.

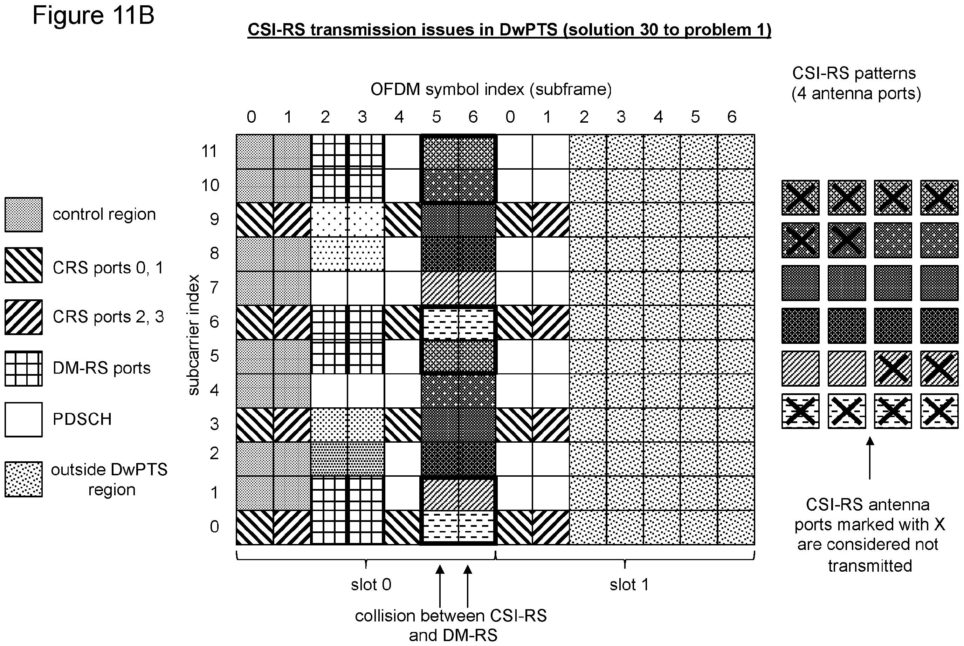

In Figure 11B, there are six CSI-RS patterns occupying OFDM symbols 5 and 6 of the first slot. According to the second solution 30, the individual CSI-RS antenna ports (not the entire CSI-RS pattern) are considered not transmitted if in the region of conflict (indicated with thick black lines). Thus, for CSI-RS antenna ports at locations (10,5), (10,6), (4,5), (4,6), only the CSI-RS antenna ports at locations (10,5) and (10,6) are considered not transmitted, while CSI-RS antenna ports at locations (4,5) and (4,6) are considered transmitted. This may be thought of as a partial transmission of the CSI-RS pattern.

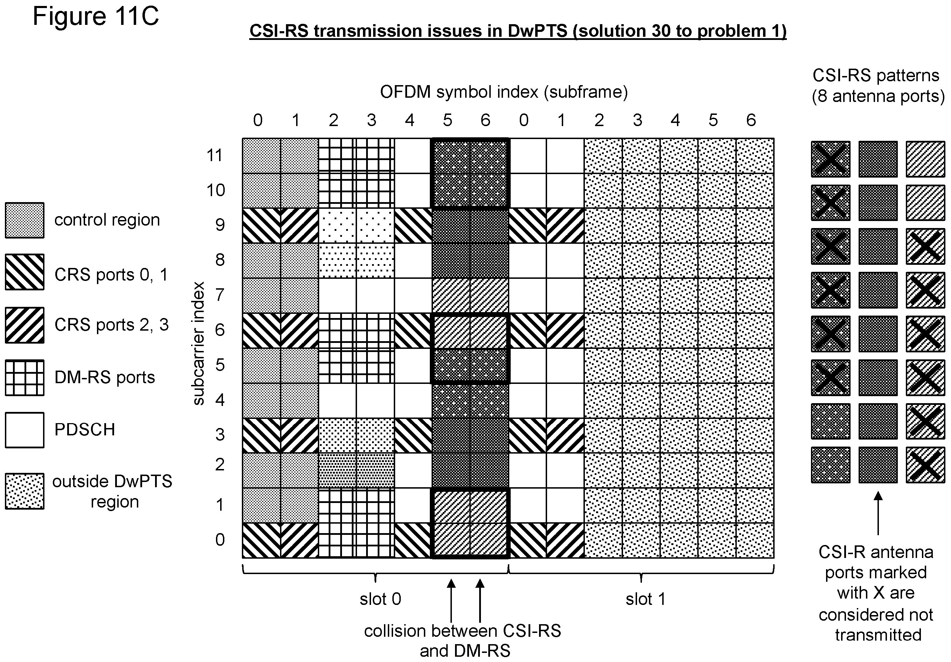

Figure 11C shows a similar result. This time, there are three CSI-RS patterns occupying OFDM symbols 5 and 6 of the first slot. Two of the CSI-RS patterns have CSI-RS antenna ports in the region of conflict. Thus, instead of considering the entire CSI-RS pattern not transmitted, in the solution 30, six of the eight CSI-RS antenna ports making up a first CSI-RS pattern are considered not transmitted, and this is true for a second CSI-RS pattern as well. These two CSI-RS patterns are considered partially transmitted. A third CSI-RS pattern has no CSI-RS antenna ports occupying the region of conflict and is thus fully transmitted.

In some embodiments, the DM-RS in OFDM symbols 5 and 6 (not explicitly shown) in each of Figures 11A - 11C are still considered transmitted.

### Solution (40) to collision between DM-RS and CSI-RS

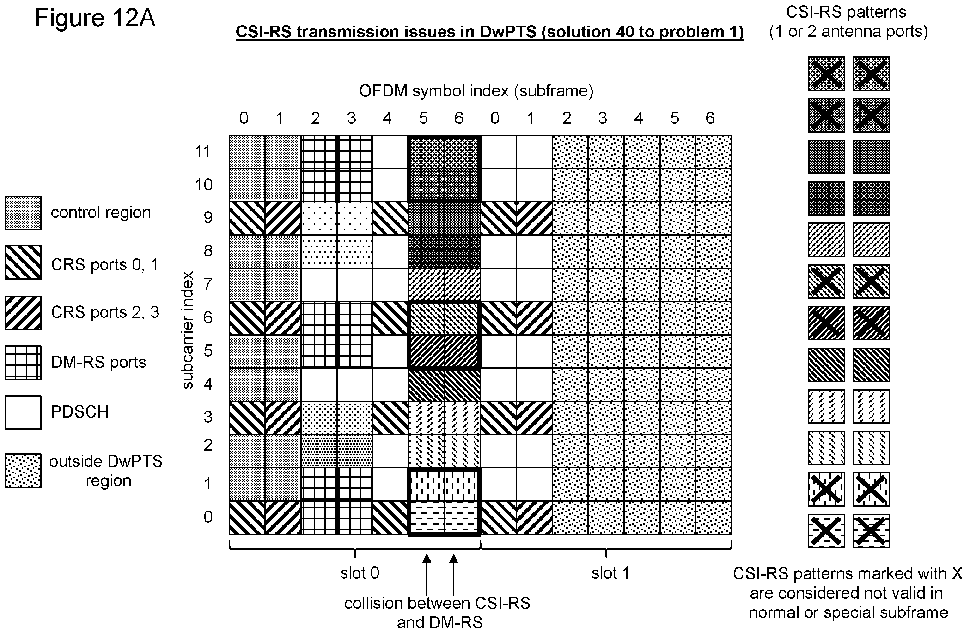

In a solution 40, the entire CSI-RS pattern is considered not valid if its transmission would result in a collision with any DM-RS antenna port on any subframe. In some embodiments, Figures 12A - 12C illustrate the solution 40, for one or two antenna ports, four antenna ports, and eight antenna ports, respectively.

The solution 40 is distinguishable from the solution 20 in that the dropping of the CSI-RS pattern is not confined to the special subframe having the collision with DM-RS, but includes all subframes. Recall from Figure 2 that the LTE type 2 frame structure, used for TDD, includes ten subframes, only two of which are special subframes. In some embodiments, for solution 40, the UE assumes that CSI-RS pattern is not transmitted by the eNB in the special subframes (where collision with DM-RS happens) and the CSI-RS pattern is also not transmitted by the eNB in the normal subframes. The distinction between normal and special subframe behavior is not depicted in Figures 12A - 12C, as the figures illustrate only special subframes. However, solution 40 is more restrictive than solution 20, above.

In Figure 12A, there are twelve CSI-RS patterns occupying OFDM symbols 5 and 6 of slot 0. According to the solution 40, CSI-RS patterns in the region of conflict (indicated with thick black lines) are considered not transmitted. In the one- or two-antenna port configuration, if CSI-RS antenna port occupies the region of conflict, the other one does as well. Thus, the same six CSI-RS patterns as in Figure 10A are considered not transmitted. The six CSI-RS patterns marked with an X are considered not valid.

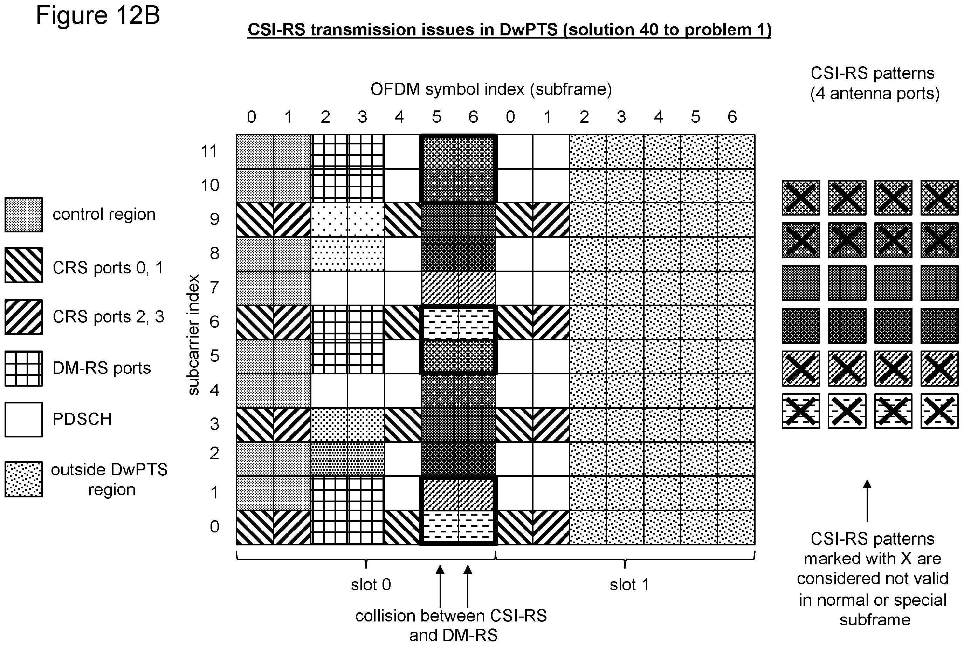

In Figure 12B, there are six CSI-RS patterns occupying OFDM symbols 5 and 6 of the first slot. According to the solution 40, the entire CSI-RS pattern is considered invalid if any of its CSI-RS antenna ports is found in the region of conflict (indicated with thick black lines).

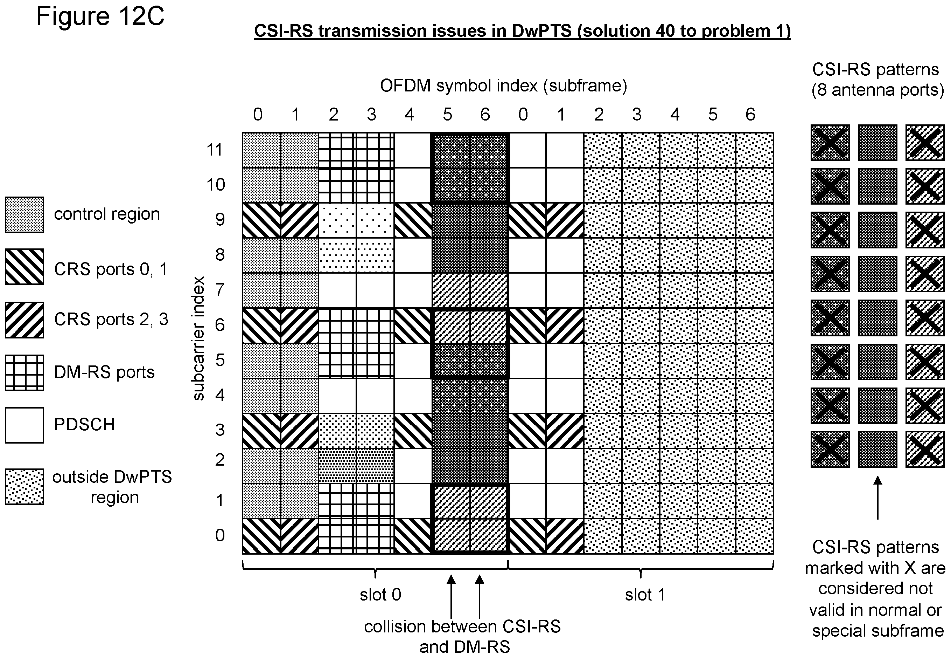

Figure 12C shows a similar result. This time, there are three CSI-RS patterns occupying OFDM symbols 5 and 6 of the first slot. Two of the CSI-RS patterns have CSI-RS antenna ports in the region of conflict. Thus, two of the three CSI-RS patterns are considered invalid. A third CSI-RS pattern has no CSI-RS antenna ports occupying the region of conflict and is thus fully transmitted.

In some embodiments, the DM-RS in OFDM symbols 5 and 6 (not explicitly shown) in each of Figures 12A - 12C are still considered transmitted. In some embodiments, the solutions 20, 30, and 40 apply for zero-power CSI-RS that share the same resources with non-zero-power CSI-RS with four antenna ports.

When collision between the CSI-RS pattern and DM-RS occurs, the UE considers the case as an error or misconfiguration. Thus, the solution 40 regards the transmission as not valid. In contrast, solution 20 regards the CSI-RS pattern as valid from the UE perspective (that is, allowed to be configured), but, where the CSI-RS pattern collides with DM-RS, the pattern is considered not transmitted by the eNB.

### Transmission of the CSI-RS antenna ports outside the DwPTS region

Returning to Figure 9, the CSI-RS method 100 also addresses the transmission of CSI-RS outside the DwPTS region of the special subframe. Recall that, for SSCs 1 and 6, the DwPTS region of the special subframe is 9 OFDM symbols wide and for SSCs 2 and 7, the DwPTS region of the special subframe is 10 OFDM symbols wide.

### Solution (50) to CSI-RS transmission outside DwPTS

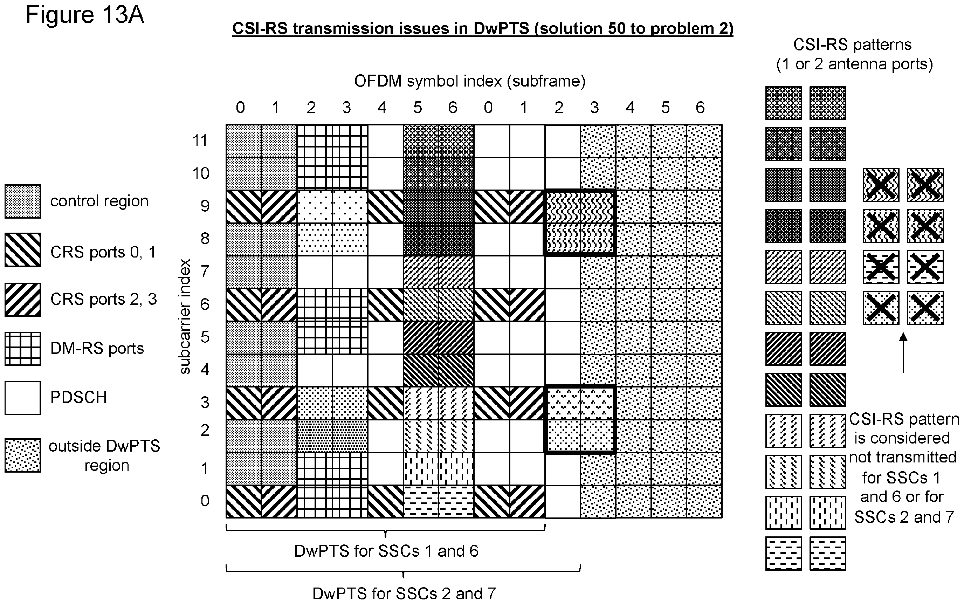

In a solution 50, the CSI-RS pattern is considered not transmitted in a given special subframe if any CSI-RS antenna port resides outside the DwPTS of the special subframe. In some embodiments, Figures 13A - 13C illustrate the solution 50, for one or two antenna ports, four antenna ports, and eight antenna ports, respectively.

A given CSI-RS pattern could reside either on the normal subframes or on the special subframes. The CSI-RS pattern may be decodable in the normal subframes while being outside the DwPTS region in the special subframes. In some embodiments, for solution 50, where the CSI-RS pattern is outside the DwPTS region of the special subframe, the UE assumes that CSI-RS pattern is not transmitted by the eNB in the special subframes but the CSI-RS pattern is transmitted by the eNB in the normal subframes. The distinction between normal and special subframe behavior is not depicted in Figures 13A - 13C, as the figures illustrate only special subframes.

In Figure 13A, there are twelve CSI-RS patterns occupying OFDM symbols 5 and 6 of slot 0. Now, the region of conflict is in OFDM symbols 2 and 3 of slot 1. Thus, additional CSI-RS patterns are indicated at those locations. According to the solution 50, CSI-RS patterns in the region of conflict (indicated with thick black lines) are considered not transmitted. Half of four CSI-RS patterns reside outside SSCs 2 or 7; all of these same four CSI-RS patterns reside outside SSCs 1 and 6. According to the solution 50, the CSI-RS pattern is considered not transmitted since four CSI-RS antenna ports reside outside the DwPTS of the special subframe (partially outside in SSCs 2 and 7 and entirely outside in SSCs 1 and 6). The CSI-RS patterns considered "not transmitted" are marked with an X.

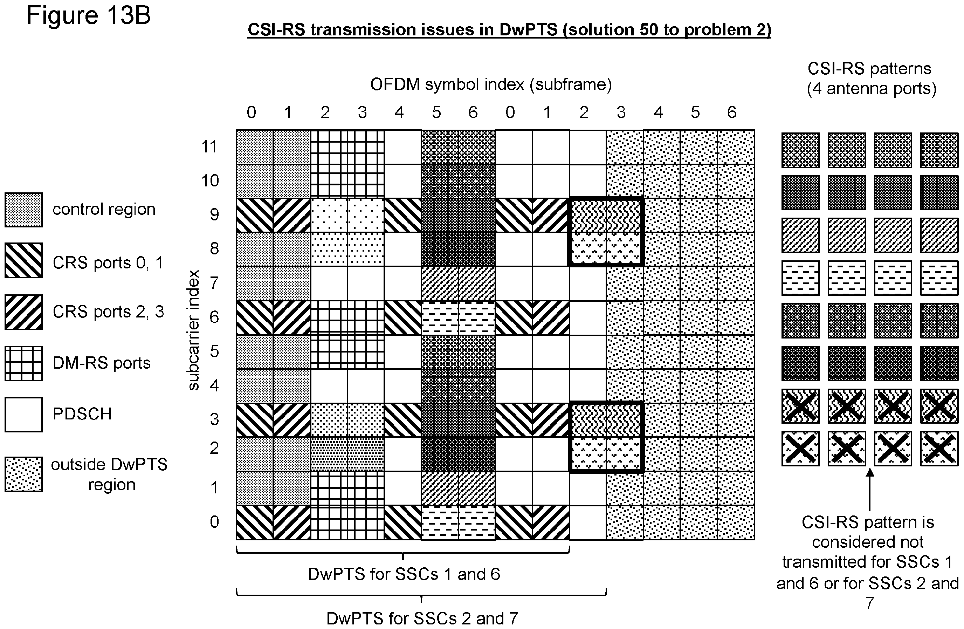

In Figure 13B, there are eight CSI-RS patterns possible. According to the solution 50, the entire CSI-RS pattern is considered not transmitted if any of its CSI-RS antenna ports is found in the region of conflict (indicated with thick black lines). In this example, only two CSI-RS patterns are considered not transmitted. For SSCs 1 and 6, all the CSI-RS antenna ports making up the two CSI-RS patterns are outside the DwPTS region; for SSCs 2 and 7, half the CSI-RS antenna ports of these CSI-RS patterns are inside the DwPTS. Nevertheless, the result for all four SSCs is that the entire CSI-RS patterns (marked with Xs) are considered not transmitted.

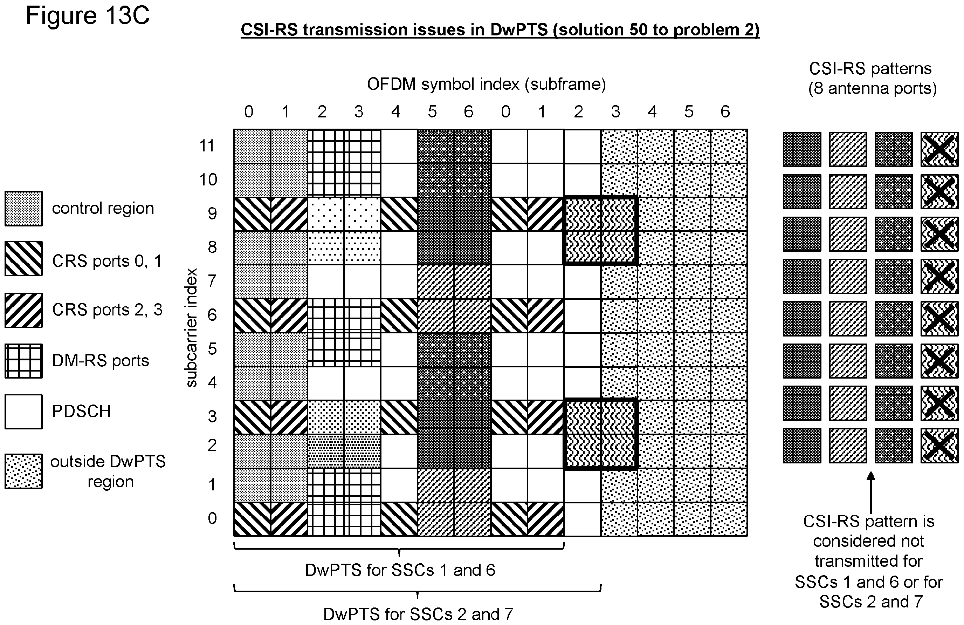

Figure 13C shows a similar result. There are four possible CSI-RS patterns, one of which has, for SSCs 1 and 6, all eight of its CSI-RS antenna ports in the region of conflict, and, for SSCs 2 and 7, half of its CSI-RS antenna ports in the region of conflict. In either case, according to the solution 50, the CSI-RS pattern (marked with Xs) is considered not transmitted.

### Solution (60) to CSI-RS transmission outside DwPTS

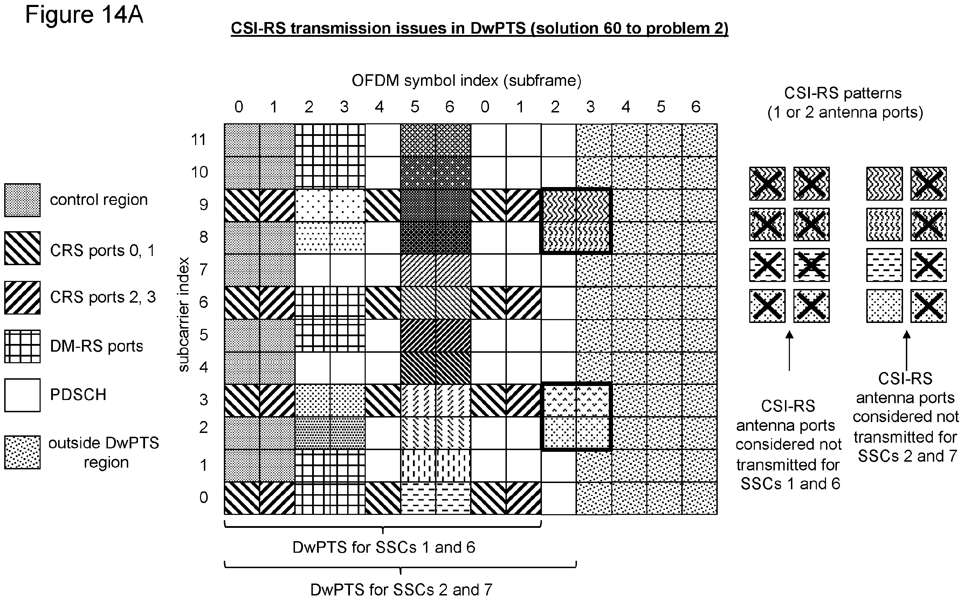

In a solution 60, the UE assumes that only the CSI-RS antenna ports that would be inside the DwPTS of the downlink special subframe are considered as transmitted by the serving cell. In some embodiments, Figures 14A - 14C illustrate the solution 60, for one or two antenna ports, four antenna ports, and eight antenna ports, respectively.

In Figure 14A, there are four CSI-RS patterns, each comprising two CSI-RS antenna ports, that occupy the conflict region (indicated with thick black lines). For SSCs 1 and 6, the entire CSI-RS patterns are outside the DwPTS region; for SSCs 2 and 7, each CSI-RS pattern includes a CSI-RS antenna port that is outside the DwPTS region. In this example, there is a difference between SSCs 1 and 6 and SSCs 2 and 7, as indicated. For SSCs 1 and 6, all eight CSI-RS antenna ports (and thus all four CSI-RS patterns) are considered not transmitted; for SSCs 2 and 7, half of the CSI-RS antenna ports are considered transmitted, one from each of the four CSI-RS patterns.

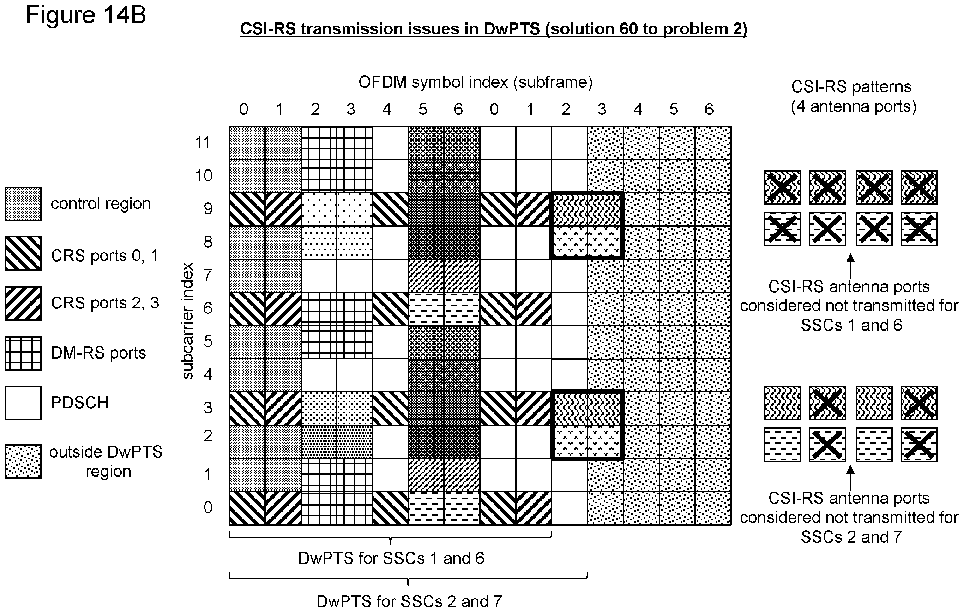

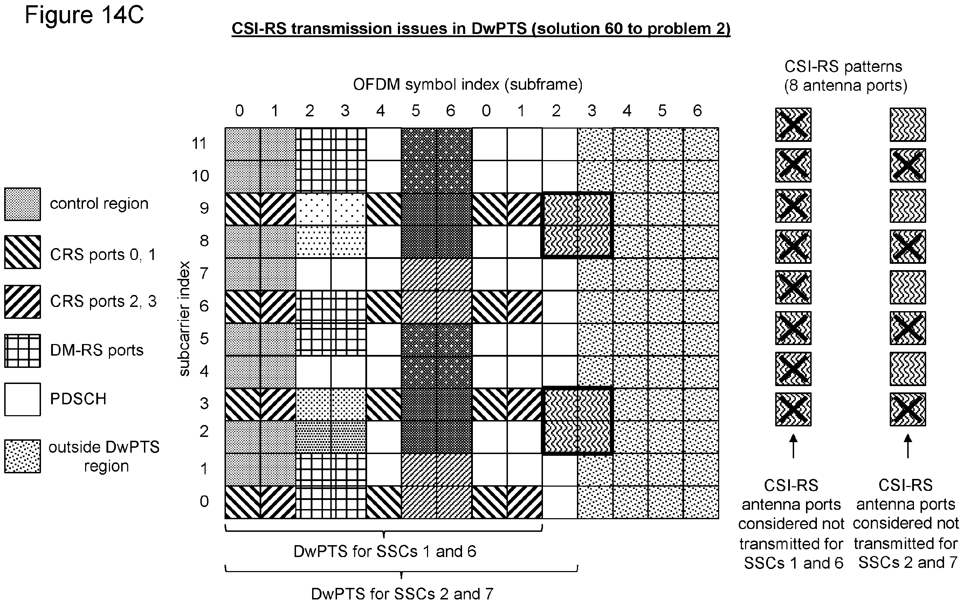

In Figure 14B, there are two CSI-RS patterns at issue, each comprising four CSI-RS antenna ports. Again, for SSCs 1 and 6, all the CSI-RS antenna ports making up each CSI-RS pattern, are considered not transmitted while for SSCs 2 and 7, half of the CSI-RS antenna ports are considered transmitted. A similar result is shown in Figure 14C, with half of the CSI-RS antenna ports being rejected for SSCs 2 and 7, and all of the CSI-RS antenna ports at issue being rejected for SSCs 1 and 6. In some embodiments, the results for other special subframe configurations not described herein are similarly addressed.

### Solution (70) to CSI-RS transmission outside DwPTS

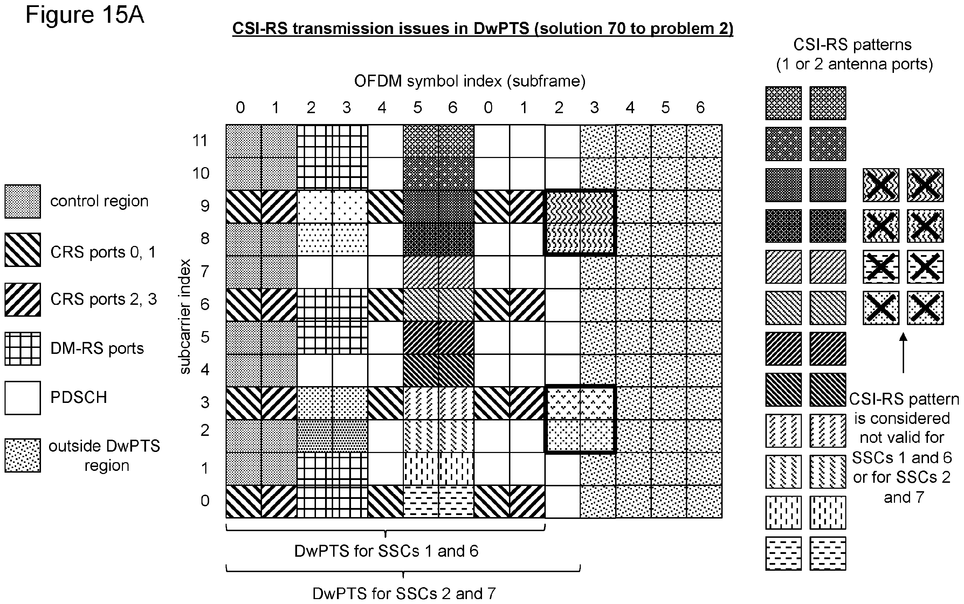

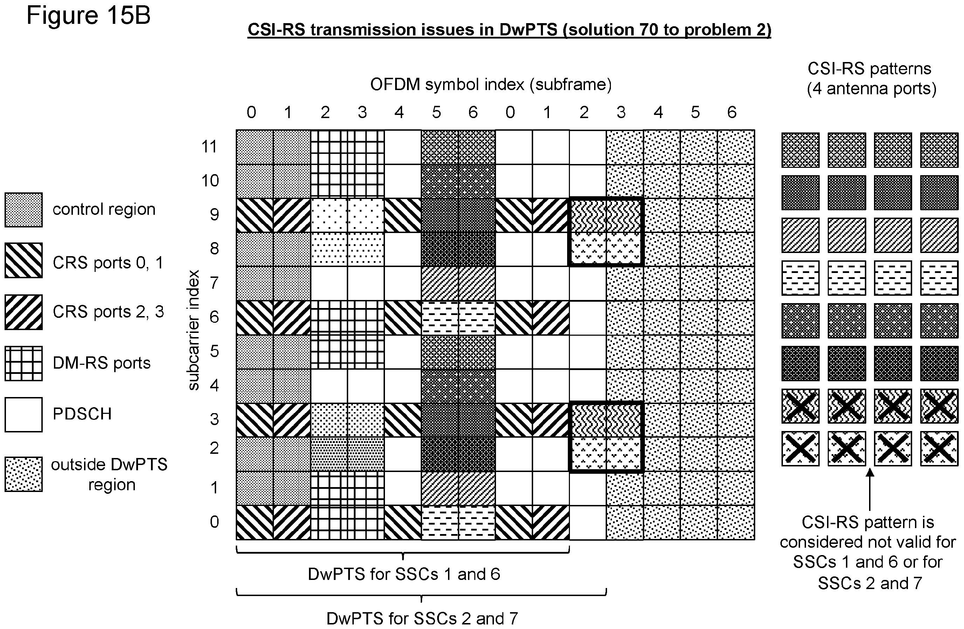

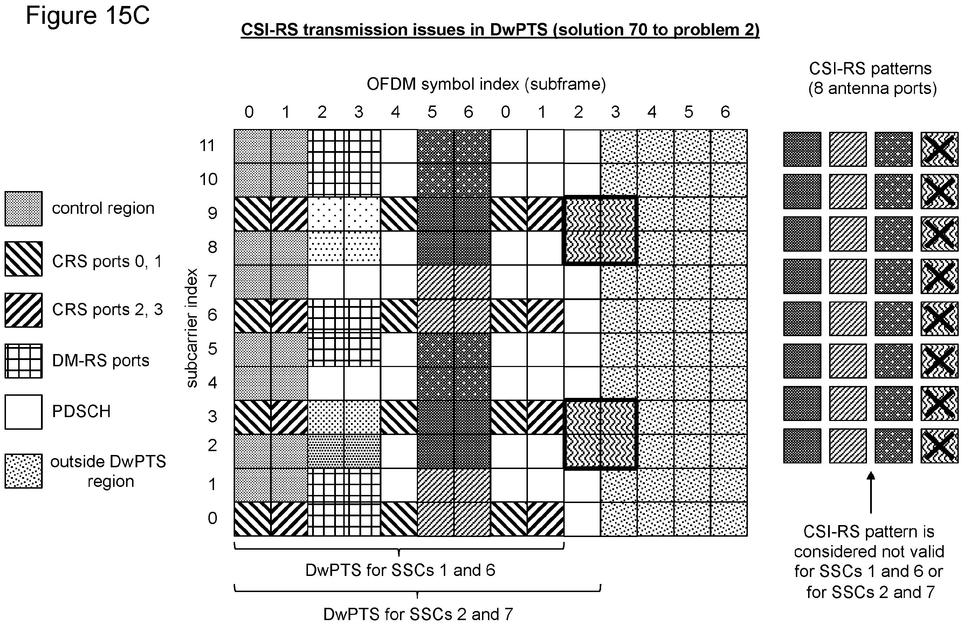

In a solution 70, the entire CSI-RS pattern is considered not valid if its transmission would result in any CSI-RS antenna ports residing outside the DwPTS of the downlink subframe. In some embodiments, Figures 15A - 15C illustrate the solution 70, for one or two antenna ports, four antenna ports, and eight antenna ports, respectively.

A given CSI-RS pattern could reside either on the normal subframes or on the special subframes. The CSI-RS pattern may be decodable in the normal subframes while being outside the DwPTS region in the special subframes. In some embodiments, for solution 70, where the CSI-RS pattern is outside the DwPTS region of the special subframe, the UE assumes that CSI-RS pattern is not transmitted by the eNB in either the special subframes or the normal subframes. The distinction between normal and special subframe behavior is not depicted in Figures 15A - 15C, as the figures illustrate only special subframes. However, solution 70 is more restrictive than solution 50, above.

In Figure 15A, there are twelve CSI-RS patterns occupying OFDM symbols 5 and 6 of slot 0. Now, the region of conflict is in OFDM symbols 2 and 3 of slot 1. Additional CSI-RS patterns are indicated at those locations. According to the solution 70, CSI-RS patterns in the region of conflict (indicated with thick black lines) are considered not valid. Half of four CSI-RS patterns reside outside SSCs 2 or 7; all of these same four CSI-RS patterns reside outside SSCs 1 and 6. According to the solution 70, the CSI-RS pattern is considered not valid since four CSI-RS antenna ports reside outside the DwPTS of the special subframe (partially outside in SSCs 2 and 7 and entirely outside in SSCs 1 and 6). The CSI-RS patterns considered "not valid" are marked with an X.

In Figure 13B, there are eight CSI-RS patterns possible. According to the solution 50, the entire CSI-RS pattern is considered not transmitted if any of its CSI-RS antenna ports is found in the region of conflict (indicated with thick black lines). In this example, only two CSI-RS patterns are considered not transmitted. For SSCs 1 and 6, all the CSI-RS antenna ports making up the two CSI-RS patterns are outside the DwPTS region; for SSCs 2 and 7, half the CSI-RS antenna ports of these CSI-RS patterns are inside the DwPTS. Nevertheless, the result for all four SSCs is that the entire CSI-RS patterns (marked with Xs) are considered not valid.

Figure 13C shows a similar result. There are four possible CSI-RS patterns, one of which has, for SSCs 1 and 6, all eight of its CSI-RS antenna ports in the region of conflict, and, for SSCs 2 and 7, half of its CSI-RS antenna ports in the region of conflict. In either case, according to the solution 50, the CSI-RS pattern (marked with Xs) is considered not transmitted.

### Solution (80) to CSI-RS transmission outside DwPTS

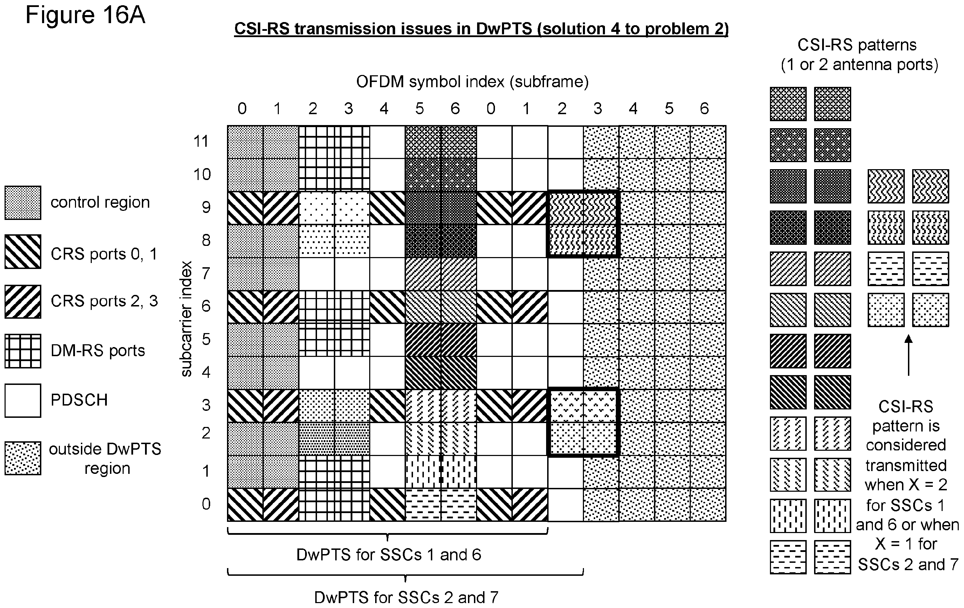

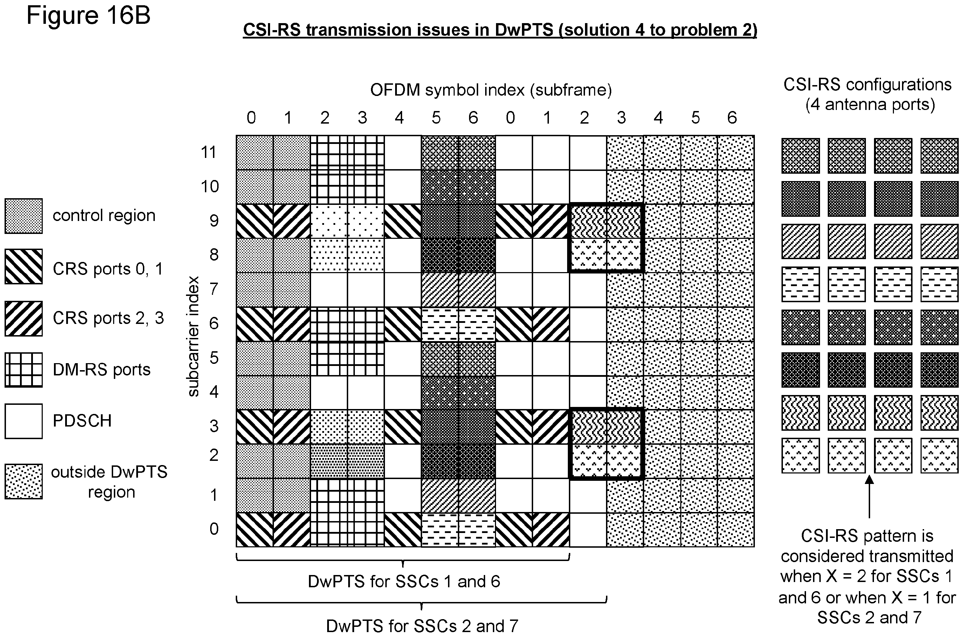

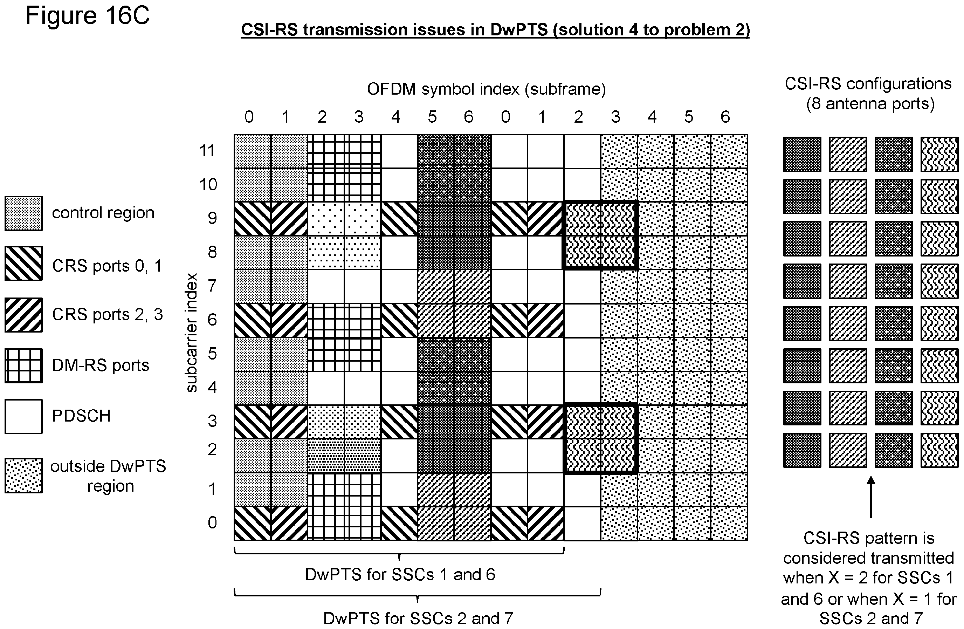

In a solution 80, the CSI-RS pattern can be transmitted outside of the downlink subframe. In some embodiments, the UE gets to decide whether to accept the CSI-RS patterns or not. The CSI-RS pattern transmission is conditional, e.g., when the CSI-RS antenna ports are transmitted no later than X OFDM symbols after the last OFDM symbol of the subframe (e.g., X = 1). In some embodiments, Figures 16A - 16C illustrate the solution 80, for one or two antenna ports, four antenna ports, and eight antenna ports, respectively.

It is up to UE implementation whether or not to receive the corresponding antenna ports. For example, a UE located close to the serving cell with a small value of the timing advance may be able to receive the CSI-RS and update the channel measurements, while a far away UE with a larger timing advance may skip the channel estimation from the corresponding resource (instead relying on the remaining CSI-RS antenna ports that reside inside the DwPTS of the downlink special subframe).

The embodiments above applies for ZP CSI-RS that basically share the same resources with NZP CSI-RS with four antenna ports. Although the solutions 50, 60, 70, and 80 are illustrated above for special subframe configurations 1, 2, 6, and 7, the principles described herein may be applied to other special subframe configurations.

Various techniques, or certain aspects or portions thereof, may take the form of program code (i.e., instructions) embodied in tangible media, such as floppy diskettes, CD-ROMs, hard drives, non-transitory computer readable storage medium, or any other machine-readable storage medium wherein, when the program code is loaded into and executed by a machine, such as a computer, the machine becomes an apparatus for practicing the various techniques. A non-transitory computer-readable storage medium can be a computer-readable storage medium that does not include a signal. In the case of program code execution on programmable computers, the computing device may include a processor, a storage medium readable by the processor (including volatile and non-volatile memory and/or storage elements), at least one input device, and at least one output device. The volatile and non-volatile memory and/or storage elements may be a RAM, EPROM, flash drive, optical drive, magnetic hard drive, solid state drive, or other medium for storing electronic data. The node and wireless device may also include a transceiver module, a computer module, a processing module, and/or a clock module or timer module. One or more programs that may implement or utilize the various techniques described herein may use an application programming interface (API), reusable controls, and the like. Such programs may be implemented in a high-level procedure or object-oriented programming language to communicate with a computer system. However, the program(s) may be implemented in assembly or machine language, if desired. In any case, the language may be a compiled or interpreted language, and combined with hardware implementations.

It should be understood that many of the functional units described in the specification have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Reference throughout this specification to "an example" or means that a particular feature, structure, or characteristic described in connection with the example is included in at least one embodiment of the present invention. Thus, appearances of the phrases, "in an example" or "in some embodiments" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and examples of the present invention may be referred to herein along with alternatives for the various components thereof. It is understood that such embodiments, examples, and alternatives are not to be construed as de facto equivalents of one another, but are to be considered as separate and autonomous representations of the present invention. Furthermore, the described features, structures, or characteristics may be combined in any suitable manner in one or more embodiments.

As used herein, the term "circuitry" may refer to, be part of, or include an ASIC, an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

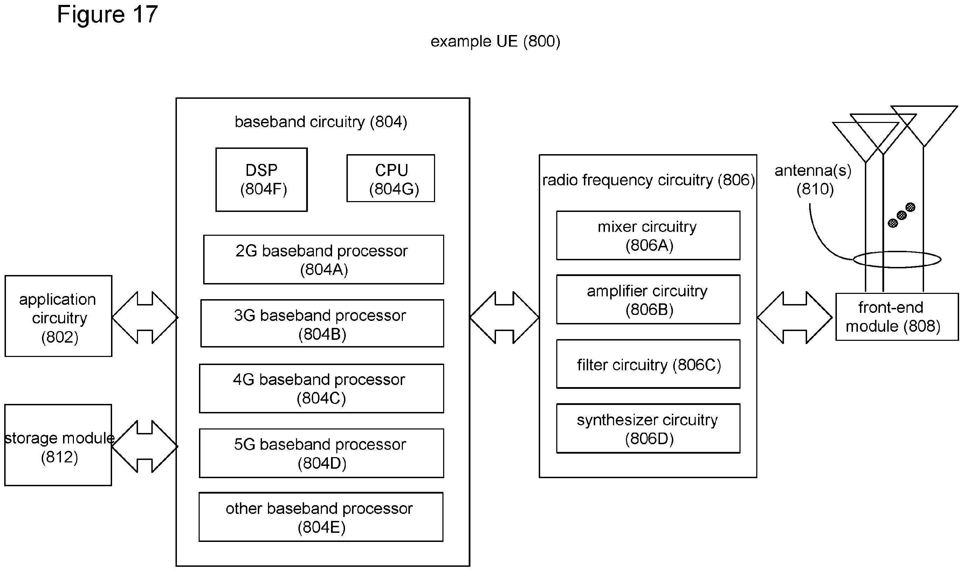

Embodiments described herein may be implemented into a system using any suitably configured hardware and/or software. Figure 17 illustrates, for one embodiment, example components of a User Equipment (UE) device 800. In some embodiments, the UE device 800 may include application circuitry 802, baseband circuitry 804, Radio Frequency (RF) circuitry 806, front-end module (FEM) circuitry 808 and one or more antennas 810, coupled together at least as shown.

The application circuitry 802 may include one or more application processors. For example, the application circuitry 802 may include circuitry such as, but not limited to, one or more single-core or multi-core processors. The processor(s) may include any combination of general-purpose processors and dedicated processors (e.g., graphics processors, application processors, etc.). The processors may be coupled with and/or may include a storage medium 812 or other type of memory/storage and may be configured to execute instructions stored in the memory/storage to enable various applications and/or operating systems to run on the system.

The baseband circuitry 804 may include circuitry such as, but not limited to, one or more single-core or multi-core processors. The baseband circuitry 804 may include one or more baseband processors and/or control logic to process baseband signals received from a receive signal path of the RF circuitry 806 and to generate baseband signals for a transmit signal path of the RF circuitry 806. Baseband processing circuity 804 may interface with the application circuitry 802 for generation and processing of the baseband signals and for controlling operations of the RF circuitry 806. For example, in some embodiments, the baseband circuitry 804 may include a second generation (2G) baseband processor 804A, third generation (3G) baseband processor 804B, fourth generation (4G) baseband processor 804C, and/or other baseband processor(s) 804D for other existing generations, generations in development, or to be developed in the future (e.g., fifth generation (5G), 6G, etc.). The baseband circuitry 804 (e.g., one or more of baseband processors 804A - D) may handle various radio control functions that enable communication with one or more radio networks via the RF circuitry 806. The radio control functions may include, but are not limited to, signal modulation/demodulation, encoding/decoding, radio frequency shifting, etc. In some embodiments, modulation/demodulation circuitry of the baseband circuitry 804 may include Fast-Fourier Transform (FFT), precoding, and/or constellation mapping/demapping functionality. In some embodiments, encoding/decoding circuitry of the baseband circuitry 804 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 804 may include elements of a protocol stack such as, for example, elements of an EUTRAN protocol including, for example, physical (PHY), media access control (MAC), radio link control (RLC), packet data convergence protocol (PDCP), and/or radio resource control (RRC) elements. A central processing unit (CPU) 804E of the baseband circuitry 804 may be configured to run elements of the protocol stack for signaling of the PHY, MAC, RLC, PDCP, and/or RRC layers. In some embodiments, the baseband circuitry may include one or more audio digital signal processor(s) (DSP) 804F. The audio DSP(s) 804F may include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 804 and the application circuitry 802 may be implemented together such as, for example, on a system on a chip (SOC).

In some embodiments, the baseband circuitry 804 may provide for communication compatible with one or more radio technologies. For example, in some embodiments, the baseband circuitry 804 may support communication with a EUTRAN and/or other wireless metropolitan area networks (WMAN), a wireless local area network (WLAN), or a wireless personal area network (WPAN). Embodiments in which the baseband circuitry 804 is configured to support radio communications of more than one wireless protocol may be referred to as multi-mode baseband circuitry.

RF circuitry 806 may enable communication with wireless networks using modulated electromagnetic radiation through a non-solid medium. In various embodiments, the RF circuitry 806 may include switches, filters, amplifiers, etc., to facilitate the communication with the wireless network. RF circuitry 806 may include a receive signal path which may include circuitry to down-convert RF signals received from the FEM circuitry 808 and provide baseband signals to the baseband circuitry 804. RF circuitry 806 may also include a transmit signal path which may include circuitry to up-convert baseband signals provided by the baseband circuitry 804 and provide RF output signals to the FEM circuitry 808 for transmission.

In some embodiments, the RF circuitry 806 may include a receive signal path and a transmit signal path. The receive signal path of the RF circuitry 806 may include mixer circuitry 806A, amplifier circuitry 806B and filter circuitry 806C. The transmit signal path of the RF circuitry 806 may include filter circuitry 806C and mixer circuitry 806A. RF circuitry 806 may also include synthesizer circuitry 806D for synthesizing a frequency for use by the mixer circuitry 806A of the receive signal path and the transmit signal path. In some embodiments, the mixer circuitry 806A of the receive signal path may be configured to down-convert RF signals received from the FEM circuitry 808 based on the synthesized frequency provided by synthesizer circuitry 806D. The amplifier circuitry 806B may be configured to amplify the down-converted signals and the filter circuitry 806C may be a low-pass filter (LPF) or band-pass filter (BPF) configured to remove unwanted signals from the down-converted signals to generate output baseband signals. Output baseband signals may be provided to the baseband circuitry 804 for further processing. In some embodiments, the output baseband signals may be zero-frequency baseband signals, although this is not a requirement. In some embodiments, mixer circuitry 806A of the receive signal path may comprise passive mixers, although the scope of the embodiments is not limited in this respect.

In some embodiments, the mixer circuitry 806A of the transmit signal path may be configured to up-convert input baseband signals based on the synthesized frequency provided by the synthesizer circuitry 806D to generate RF output signals for the FEM circuitry 808. The baseband signals may be provided by the baseband circuitry 804 and may be filtered by filter circuitry 806C. The filter circuitry 806C may include a low-pass filter (LPF), although the scope of the embodiments is not limited in this respect.

In some embodiments, the mixer circuitry 806A of the receive signal path and the mixer circuitry 806A of the transmit signal path may include two or more mixers and may be arranged for quadrature downconversion and/or upconversion, respectively. In some embodiments, the mixer circuitry 806A of the receive signal path and the mixer circuitry 806A of the transmit signal path may include two or more mixers and may be arranged for image rejection (e.g., Hartley image rejection). In some embodiments, the mixer circuitry 806A of the receive signal path and the mixer circuitry may be arranged for direct downconversion and/or direct upconversion, respectively. In some embodiments, the mixer circuitry 806A of the receive signal path and the mixer circuitry of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 806 may include analog-to-digital converter (ADC) and digital-to-analog converter (DAC) circuitry and the baseband circuitry 804 may include a digital baseband interface to communicate with the RF circuitry 806.

In some dual-mode embodiments, a separate radio IC circuitry may be provided for processing signals for each spectrum, although the scope of the embodiments is not limited in this respect.

In some embodiments, the synthesizer circuitry 806D may be a fractional-N synthesizer or a fractional N/N+1 synthesizer, although the scope of the embodiments is not limited in this respect as other types of frequency synthesizers may be suitable. For example, synthesizer circuitry 806D may be a delta-sigma synthesizer, a frequency multiplier, or a synthesizer comprising a phase-locked loop with a frequency divider.

The synthesizer circuitry 806D may be configured to synthesize an output frequency for use by the mixer circuitry 806A of the RF circuitry 806 based on a frequency input and a divider control input. In some embodiments, the synthesizer circuitry 806D may be a fractional N/N+1 synthesizer.

In some embodiments, frequency input may be provided by a voltage controlled oscillator (VCO), although that is not a requirement. Divider control input may be provided by either the baseband circuitry 804 or the applications processor 802 depending on the desired output frequency. In some embodiments, a divider control input (e.g., N) may be determined from a look-up table based on a channel indicated by the applications processor 802.

Synthesizer circuitry 806D of the RF circuitry 806 may include a divider, a delay-locked loop (DLL), a multiplexer, and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump, and a D-type flip-flop. In these embodiments, the delay elements may be configured to break a VCO period up into N_{d} equal packets of phase, where N_{d} is the number of delay elements in the delay line. In this way, the DLL provides negative feedback to help ensure that the total delay through the delay line is one VCO cycle.

In some embodiments, synthesizer circuitry 806D may be configured to generate a carrier frequency as the output frequency, while in other embodiments, the output frequency may be a multiple of the carrier frequency (e.g., twice the carrier frequency, four times the carrier frequency), and used in conjunction with quadrature generator and divider circuitry to generate multiple signals at the carrier frequency with multiple different phases with respect to each other. In some embodiments, the output frequency may be a LO frequency (f_{LO}). In some embodiments, the RF circuitry 806 may include an IQ/polar converter.

## Claims

1. A method performed by a User Equipment, UE (800), the method comprising:
receiving, over an air interface, a special subframe (100) with a downlink part that is smaller than a normal subframe, the special subframe comprising Physical Downlink Shared Channel, PDSCH, and enhanced Physical Downlink Control Channel, E-PDCCH, resource element mapping;
deriving, based on a predetermined rule, a PDSCH or E-PDCCH RE mapping pattern, wherein the E-PDCCH or PDSCH is received in accordance to the derived PDSCH or E-PDCCH RE mapping pattern;
**characterized in that** the method further comprises:
identifying a conflict region in the special subframe, wherein the conflict region comprises one or more Zero Power, ZP, Channel State Information Reference Signals, CSI-RSs, and antenna ports of one or more CSI-RS patterns residing outside a Downlink Pilot Time Slot, DwPTS, region of the special subframe; and
for any CSI-RS pattern in the special subframe that has one or more ZP CSI-RS antenna ports residing outside the DwPTS region of the special subframe, considering an entire ZP CSI-RS pattern that has one or more ZP CSI-RS antenna ports residing outside the DwPTS region of the special subframe as not transmitted by a serving cell.

2. The method of claim 1 further comprising:
identifying another conflict region in the special subframe, where the other conflict region comprises a collision between a CSI-RS pattern and one or more demodulation reference signals, DM-RS.

3. The method of claim 2, wherein the ZP CSI-RS pattern is considered not transmitted; or
wherein the UE assumes that only the ZP CSI-RS pattern not in the conflict region are considered transmitted by a serving cell; or
wherein the ZP CSI-RS pattern is considered not valid.

4. A computer-readable medium comprising instructions which, when executed by a computer, cause the computer to carry out the method of any of claims 1-3.

5. An apparatus for use in a user equipment, UE (800), the apparatus comprising radio frequency circuitry (806) and baseband circuitry (804), wherein the apparatus is configured to perform the method of any one of claims 1-3.

6. A method performed by a user equipment, UE (800), the method comprising:
receiving, over an air interface, a special subframe (100) with a downlink part that is smaller than a normal subframe, the special subframe comprising Physical Downlink Shared Channel, PDSCH, and enhanced Physical Downlink Control Channel, E-PDCCH, resource element, RE, mapping; and
deriving, based on a predetermined rule, a PDSCH or E-PDCCH RE mapping pattern, wherein the E-PDCCH or PDSCH is received in accordance to the derived PDSCH or E-PDCCH RE mapping pattern;
**characterized in that** the method further comprises:
identifying a conflict region in the special subframe, wherein the conflict region comprises one or more Zero Power, ZP, Channel State Information Reference Signals, CSI-RSs, and antenna ports of one or more CSI-RS patterns residing outside a Downlink Pilot Time Slot, DwPTS, region of the special subframe; and
for any CSI-RS pattern in the special subframe that has one or more ZP CSI-RS antenna ports residing outside the DwPTS region of the special subframe considering only the one or more ZP CSI-RS antenna ports of a ZP CSI-RS pattern residing inside the DwPTS region of the special subframe as transmitted by a serving cell.

7. The method of claim 6 further comprising:
identify another conflict region in the special subframe, where the other conflict region comprises a collision between a CSI-RS pattern and one or more demodulation reference signals, DM-RS.

8. The method of claim 6, wherein the entire ZP CSI-RS pattern is considered not transmitted; or wherein the UE (800) assumes that only a ZP CSI-RS pattern not in the conflict region are considered transmitted by the serving cell; or
wherein the entire ZP CSI-RS pattern is considered not valid.

9. A computer-readable medium comprising instructions which, when executed by a computer, cause the computer to carry out the method of any of claims 6-8.

10. An apparatus for use in a user equipment, UE (800), the apparatus comprising radio frequency circuitry (806) and baseband circuitry (804), wherein the apparatus is configured to perform the method of any one of claims 6-8.

11. A method performed by an apparatus for us in a user equipment, UE (800), wherein the method comprises:
receiving, over an air interface, a special subframe (100) with a downlink part that is smaller than a normal subframe, the special subframe comprising Physical Downlink Shared Channel, PDSCH, and enhanced Physical Downlink Control Channel, E-PDCCH, resource element, RE, mapping; and
deriving, based on a predetermined rule, a PDSCH or E-PDCCH RE mapping pattern, wherein the E-PDCCH or PDSCH is received in accordance to the derived PDSCH or E-PDCCH RE mapping pattern;
**characterized in that** the method further comprises:
identifying a conflict region in the special subframe , wherein the conflict region comprises one or more Zero Power, ZP, Channel State Information Reference Signals, CSI-RSs, and antenna ports of one or more CSI-RS patterns residing outside a Downlink Pilot Time Slot, DwPTS, region of the special subframe; and
for any CSI-RS pattern in the special subframe that has one or more ZP CSI-RS antenna ports residing outside the DwPTS region of the special subframe considering the respective CSI-RS pattern having one or more ZP CSI-RS antenna ports residing outside the DwPTS region of the special subframe as transmitted by a serving cell, if the one or more ZP CSI- RS antenna ports of the respective CSI-RS pattern are transmitted no later than X Orthogonal Frequency Division Multiplexing, OFDM, symbols after the last OFDM symbol of the special subframe, wherein X is an integer greater than one.

12. The method of claim 11 further comprising:
identifying another conflict region in the special subframe, where the other conflict region comprises a collision between a CSI-RS pattern and one or more demodulation reference signals, DM-RS.

13. The method of claim 11, wherein the entire ZP CSI-RS pattern is considered not transmitted; or wherein the UE (800) assumes that only a ZP CSI-RS pattern not in the conflict region are considered transmitted by the serving cell; or
wherein the entire ZP CSI-RS pattern is considered not valid.

14. A computer-readable medium comprising instructions which, when executed by a computer, cause the computer to carry out the method of any of claims 11-13.

15. An apparatus for use in a user equipment, UE (800), the apparatus comprising radio frequency circuitry (806) and baseband circuitry (804), wherein the apparatus is configured to perform the method of any one of claims 11-13

## Patentansprüche

1. Verfahren, das von einem Benutzergerät, UE (800), durchgeführt wird, wobei das Verfahren umfasst:
Empfangen, über eine Luftschnittstelle, eines speziellen Unterrahmens (100) mit einem Downlink-Teil, der kleiner als ein normaler Unterrahmen ist, wobei der spezielle Unterrahmen einen gemeinsam genutzten physikalischen Downlink-Kanal, PDSCH, und einen erweiterten physikalischen Downlink-Steuerkanal, E-PDCCH, umfasst;
Ableiten, basierend auf einer vorbestimmten Regel, eines PDSCH- oder E-PDCCH-RE-Zuordnungsmusters, wobei der E-PDCCH oder PDSCH gemäß dem abgeleiteten PDSCH- oder E-PDCCH-RE-Zuordnungsmuster empfangen wird;
**dadurch gekennzeichnet, dass** das Verfahren ferner umfasst:
Identifizieren einer Konfliktregion in dem speziellen Unterrahmen, wobei die Konfliktregion ein oder mehrere Nullleistungs-, ZP-, Kanalzustandsinformations-Referenzsignale, CSI-RS, und Antennenanschlüsse eines oder mehrerer CSI-RS-Muster umfasst, die sich außerhalb einer Downlink-Pilotzeitschlitz-, DwPTS-, Region des speziellen Unterrahmens befinden; und
für jedes CSI-RS-Muster in dem speziellen Unterrahmen, das einen oder mehrere ZP-CSI-RS-Antennenanschlüsse aufweist, die sich außerhalb der DwPTS-Region des speziellen Unterrahmens befinden, Berücksichtigen eines gesamten ZP-CSI-RS-Musters, das einen oder mehrere ZP-CSI-RS-Antennenanschlüsse aufweist, die sich außerhalb der DwPTS-Region des speziellen Unterrahmens befinden, als nicht von einer bedienenden Zelle übertragen.

2. Verfahren nach Anspruch 1, ferner umfassend:
Identifizieren einer anderen Konfliktregion in dem speziellen Unterrahmen, wobei die andere Konfliktregion eine Kollision zwischen einem CSI-RS-Muster und einem oder mehreren Demodulationsreferenzsignalen, DM-RS, umfasst.

3. Verfahren nach Anspruch 2, wobei das ZP-CSI-RS-Muster als nicht übertragen betrachtet wird; oder
wobei das UE annimmt, dass nur das ZP-CSI-RS-Muster, das sich nicht in der Konfliktregion befindet, als von einer bedienenden Zelle übertragen betrachtet wird; oder
wobei das ZP-CSI-RS-Muster als nicht gültig betrachtet wird.

4. Computerlesbares Medium, umfassend Anweisungen, die, wenn sie von einem Computer ausgeführt werden, den Computer veranlassen, das Verfahren nach einem der Ansprüche 1-3 auszuführen.

5. Vorrichtung zur Verwendung in einem Benutzergerät, UE (800), wobei die Vorrichtung eine Funkfrequenzschaltung (806) und eine Basisbandschaltung (804) umfasst, wobei die Vorrichtung konfiguriert ist, um das Verfahren nach einem der Ansprüche 1-3 durchzuführen.

6. Verfahren durchgeführt von einem Benutzergerät, UE (800), das Verfahren umfassend:
Empfangen, über eine Luftschnittstelle, eines speziellen Unterrahmens (100) mit einem Downlink-Teil, der kleiner als ein normaler Unterrahmen ist, wobei der spezielle Unterrahmen einen gemeinsam genutzten physikalischen Downlink-Kanal, PDSCH, und einen erweiterten physikalischen Downlink-Steuerkanal, E-PDCCH, umfasst; und
Ableiten, basierend auf einer vorbestimmten Regel, eines PDSCH- oder E-PDCCH-RE-Zuordnungsmusters, wobei der E-PDCCH oder PDSCH gemäß dem abgeleiteten PDSCH- oder E-PDCCH-RE-Zuordnungsmuster empfangen wird;
**dadurch gekennzeichnet, dass** das Verfahren ferner umfasst:
Identifizieren einer Konfliktregion in dem speziellen Unterrahmen, wobei die Konfliktregion ein oder mehrere Nullleistungs-, ZP-, Kanalzustandsinformations-Referenzsignale, CSI-RS, und Antennenanschlüsse eines oder mehrerer CSI-RS-Muster umfasst, die sich außerhalb einer Downlink-Pilotzeitschlitz-, DwPTS-, Region des speziellen Unterrahmens befinden; und
für jedes CSI-RS-Muster in dem speziellen Unterrahmen, das einen oder mehrere ZP-CSI-RS-Antennenanschlüsse aufweist, die sich außerhalb der DwPTS-Region des speziellen Unterrahmens befinden, Berücksichtigen nur des einen oder der mehreren ZP-CSI-RS-Antennenanschlüsse eines ZP-CSI-RS-Musters, das sich innerhalb der DwPTS-Region des speziellen Unterrahmens befindet, als von einer bedienenden Zelle übertragen.

7. Verfahren nach Anspruch 6, ferner umfassend:
Identifizieren einer anderen Konfliktregion in dem speziellen Unterrahmen, wobei die andere Konfliktregion eine Kollision zwischen einem CSI-RS-Muster und einem oder mehreren Demodulationsreferenzsignalen, DM-RS, umfasst.

8. Verfahren nach Anspruch 6, wobei das gesamte ZP-CSI-RS-Muster als nicht übertragen betrachtet wird; oder wobei das UE (800) annimmt, dass nur ein ZP-CSI-RS-Muster, das sich nicht in der Konfliktregion befindet, als von der bedienenden Zelle übertragen betrachtet wird; oder
wobei das gesamte ZP-CSI-RS-Muster als nicht gültig betrachtet wird.

9. Computerlesbares Medium, umfassend Anweisungen, die, wenn sie von einem Computer ausgeführt werden, den Computer veranlassen, das Verfahren nach einem der Ansprüche 6-8 auszuführen.

10. Vorrichtung zur Verwendung in einem Benutzergerät, UE (800), wobei die Vorrichtung eine Funkfrequenzschaltung (806) und eine Basisbandschaltung (804) umfasst, wobei die Vorrichtung konfiguriert ist, um das Verfahren nach einem der Ansprüche 6-8 durchzuführen.

11. Verfahren, das von einer Vorrichtung zur Verwendung in einem Benutzergerät, UE (800), durchgeführt wird, wobei das Verfahren umfasst:
Empfangen, über eine Luftschnittstelle, eines speziellen Unterrahmens (100) mit einem Downlink-Teil, der kleiner als ein normaler Unterrahmen ist, wobei der spezielle Unterrahmen einen gemeinsam genutzten physikalischen Downlink-Kanal, PDSCH, und einen erweiterten physikalischen Downlink-Steuerkanal, E-PDCCH, umfasst; und
Ableiten, basierend auf einer vorbestimmten Regel, eines PDSCH- oder E-PDCCH-RE-Zuordnungsmusters, wobei der E-PDCCH oder PDSCH gemäß dem abgeleiteten PDSCH- oder E-PDCCH-RE-Zuordnungsmuster empfangen wird;
**dadurch gekennzeichnet, dass** das Verfahren ferner umfasst:
Identifizieren einer Konfliktregion in dem speziellen Unterrahmen, wobei die Konfliktregion ein oder mehrere Nullleistungs-, ZP-, Kanalzustandsinformations-Referenzsignale, CSI-RS, und Antennenanschlüsse eines oder mehrerer CSI-RS-Muster umfasst, die sich außerhalb einer Downlink-Pilotzeitschlitz-, DwPTS-, Region des speziellen Unterrahmens befinden; und
für jedes CSI-RS-Muster in dem speziellen Unterrahmen, das einen oder mehrere ZP-CSI-RS-Antennenanschlüsse aufweist, die sich außerhalb der DwPTS-Region des speziellen Unterrahmens befinden, Berücksichtigen des jeweiligen CSI-RS-Musters, das einen oder mehrere ZP-CSI-RS-Antennenanschlüsse aufweist, die sich außerhalb der DwPTS-Region des speziellen Unterrahmens befinden, als von einer bedienenden Zelle übertragen, wenn der eine oder die mehreren ZP-CSI-RS-Antennenanschlüsse des jeweiligen CSI-RS-Musters nicht später als X Orthogonale-Frequenzmultiplex-, OFDM-, Symbole nach dem letzten OFDM-Symbol des speziellen Unterrahmens übertragen werden, wobei X eine ganze Zahl größer als eins ist.

12. Verfahren nach Anspruch 11, ferner umfassend:
Identifizieren einer anderen Konfliktregion in dem speziellen Unterrahmen, wobei die andere Konfliktregion eine Kollision zwischen einem CSI-RS-Muster und einem oder mehreren Demodulationsreferenzsignalen, DM-RS, umfasst.

13. Verfahren nach Anspruch 11, wobei das gesamte ZP-CSI-RS-Muster als nicht übertragen betrachtet wird; oder wobei das UE (800) annimmt, dass nur ein ZP-CSI-RS-Muster, das sich nicht in der Konfliktregion befindet, als von der bedienenden Zelle übertragen betrachtet wird; oder
wobei das gesamte ZP-CSI-RS-Muster als nicht gültig betrachtet wird.

14. Computerlesbares Medium, umfassend Anweisungen, die, wenn sie von einem Computer ausgeführt werden, den Computer veranlassen, das Verfahren nach einem der Ansprüche 11-13 auszuführen.

15. Vorrichtung zur Verwendung in einem Benutzergerät, UE (800), wobei die Vorrichtung eine Funkfrequenzschaltung (806) und eine Basisbandschaltung (804) umfasst, wobei die Vorrichtung konfiguriert ist, um das Verfahren nach einem der Ansprüche 11-13 durchzuführen.

## Revendications

1. Un procédé réalisé par un équipement utilisateur, UE (800), le procédé comprenant :
la réception, sur une interface hertzienne, d'une sous-trame spéciale (100) ayant une partie de liaison descendante qui est plus petite qu'une sous-trame normale, la sous-trame spéciale comprenant une mise en correspondance d'éléments de ressources de canal partagé de liaison descendante physique, PDSCH, et de canal de contrôle de liaison descendante physique amélioré, E-PDCCH ;
la déduction, sur la base d'une règle prédéterminée, d'un profil de mise en correspondance de RE de PDSCH ou d'E-PDCCH, dans lequel l'E-PDCCH ou le PDSCH est reçu conformément au profil de mise en correspondance de RE de PDSCH ou d'E-PDCCH déduit ;
**caractérisé en ce que** le procédé comprend en outre :
l'identification d'une région de conflit dans la sous-trame spéciale, dans lequel la région de conflit comprend un ou plusieurs signaux de référence d'information d'état de canal, CSI-RS, à puissance nulle, ZP, et des ports d'antenne d'un ou de plusieurs profils de CSI-RS résidant à l'extérieur d'une région de slot temporel pilote de liaison descendante, DwPTS, de la sous-trame spéciale ; et
pour tout profil de CSI-RS dans la sous-trame spéciale qui possède un ou plusieurs ports d'antenne de CSI-RS à ZP résidant à l'extérieur de la région de DwPTS de la sous-trame spéciale, la considération d'un profil de CSI-RS à ZP complet qui possède un ou plusieurs ports d'antenne de CSI-RS à ZP résidant à l'extérieur de la région de DwPTS de la sous-trame spéciale comme n'étant pas émis par une cellule de desserte.

2. Le procédé selon la revendication 1 comprenant en outre : l'identification d'une autre région de conflit dans la sous-trame spéciale, où l'autre région de conflit comprend une collision entre un profil de CSI-RS et un ou plusieurs signaux de référence de démodulation, DM-RS.

3. Le procédé selon la revendication 2, dans lequel le profil de CSI-RS à ZP est considéré comme n'étant pas émis ; ou
dans lequel l'UE suppose que seul le profil de CSI-RS à ZP qui n'est pas dans la région de conflit est considéré comme étant émis par une cellule de desserte ; ou
dans lequel le profil de CSI-RS à ZP est considéré comme n'étant pas valide.

4. Un support lisible par calculateur comprenant des instructions qui, lorsqu'elles sont exécutées par un calculateur, amènent le calculateur à mettre en oeuvre le procédé selon l'une des revendications 1 à 3.

5. Un appareil destiné à une utilisation dans un équipement utilisateur, UE (800), l'appareil comprenant une circuiterie radiofréquence (806) et une circuiterie bande de base (804), dans lequel l'appareil est configuré pour réaliser le procédé selon l'une des revendications 1 à 3.

6. Un procédé réalisé par un équipement utilisateur, UE (800), le procédé comprenant :
la réception, sur une interface hertzienne, d'une sous-trame spéciale (100) ayant une partie de liaison descendante qui est plus petite qu'une sous-trame normale, la sous-trame spéciale comprenant une mise en correspondance d'éléments de ressources, RE, de canal partagé de liaison descendante physique, PDSCH, et de canal de contrôle de liaison descendante physique amélioré, E-PDCCH ; et
la déduction, sur la base d'une règle prédéterminée, d'un profil de mise en correspondance de RE de PDSCH ou d'E-PDCCH, dans lequel l'E-PDCCH ou le PDSCH est reçu conformément au profil de mise en correspondance de RE de PDSCH ou d'E-PDCCH déduit ;
**caractérisé en ce que** le procédé comprend en outre :
l'identification d'une région de conflit dans la sous-trame spéciale, dans lequel la région de conflit comprend un ou plusieurs signaux de référence d'information d'état de canal, CSI-RS, à puissance nulle, ZP, et des ports d'antenne d'un ou de plusieurs profils de CSI-RS résidant à l'extérieur d'une région de slot temporel pilote de liaison descendante, DwPTS, de la sous-trame spéciale ; et
pour tout profil de CSI-RS dans la sous-trame spéciale qui possède un ou plusieurs ports d'antenne de CSI-RS à ZP résidant à l'extérieur de la région de DwPTS de la sous-trame spéciale, la considération de seulement les un ou plusieurs ports d'antenne de CSI-RS à ZP d'un profil de CSI-RS à ZP résidant à l'intérieur de la région de DwPTS de la sous-trame spéciale comme étant émis par une cellule de desserte.

7. Le procédé selon la revendication 6 comprenant en outre : l'identification d'une autre région de conflit dans la sous-trame spéciale, où l'autre région de conflit comprend une collision entre un profil de CSI-RS et un ou plusieurs signaux de référence de démodulation, DM-RS.

8. Le procédé selon la revendication 6, dans lequel la totalité du profil de CSI-RS à ZP est considéré comme n'étant pas émis ; ou
dans lequel l'UE (800) suppose que seul un profil de CSI-RS à ZP qui n'est pas dans la région de conflit est considéré comme étant émis par la cellule de desserte ; ou
dans lequel la totalité du profil de CSI-RS à ZP est considéré comme n'étant pas valide.

9. Un support lisible par calculateur comprenant des instructions qui, lorsqu'elles sont exécutées par un calculateur, amènent le calculateur à mettre en oeuvre le procédé selon l'une des revendications 6 à 8.

10. Un appareil destiné à une utilisation dans un équipement utilisateur, UE (800), l'appareil comprenant une circuiterie radiofréquence (806) et une circuiterie bande de base (804), dans lequel l'appareil est configuré pour réaliser le procédé selon l'une des revendications 6 à 8.

11. Un procédé réalisé par un appareil pour une utilisation dans un équipement utilisateur, UE (800), dans lequel le procédé comprend :
la réception, sur une interface hertzienne, d'une sous-trame spéciale (100) ayant une partie de liaison descendante qui est plus petite qu'une sous-trame normale, la sous-trame spéciale comprenant une mise en correspondance d'éléments de ressources, RE, de canal partagé de liaison descendante physique, PDSCH, et de canal de contrôle de liaison descendante physique amélioré, E-PDCCH ; et
la déduction, sur la base d'une règle prédéterminée, d'un profil de mise en correspondance de RE de PDSCH ou d'E-PDCCH, dans lequel l'E-PDCCH ou le PDSCH est reçu conformément au profil de mise en correspondance de RE de PDSCH ou d'E-PDCCH déduit ;
**caractérisé en ce que** le procédé comprend en outre :
l'identification d'une région de conflit dans la sous-trame spéciale, dans lequel la région de conflit comprend un ou plusieurs signaux de référence d'information d'état de canal, CSI-RS, à puissance nulle, ZP, et des ports d'antenne d'un ou de plusieurs profils de CSI-RS résidant à l'extérieur d'une région de slot temporel pilote de liaison descendante, DwPTS, de la sous-trame spéciale ; et
pour tout profil de CSI-RS dans la sous-trame spéciale qui possède un ou plusieurs ports d'antenne de CSI-RS à ZP résidant à l'extérieur de la région de DwPTS de la sous-trame spéciale, la considération du profil de CSI-RS respectif ayant un ou plusieurs ports d'antenne de CSI-RS à ZP résidant à l'extérieur de la région de DwPTS de la sous-trame spéciale comme étant émis par une cellule de desserte, si les un ou plusieurs ports d'antenne de CSI-RS à ZP du profil de CSI-RS respectif sont émis pas plus tard que X symboles de multiplexage par répartition orthogonale de la fréquence, OFDM, après le dernier symbole d'OFDM de la sous-trame spéciale, dans lequel X est un nombre entier supérieur à un.

12. Le procédé selon la revendication 11 comprenant en outre :
l'identification d'une autre région de conflit dans la sous-trame spéciale, où l'autre région de conflit comprend une collision entre un profil de CSI-RS et un ou plusieurs signaux de référence de démodulation, DM-RS.

13. Le procédé selon la revendication 11, dans lequel la totalité du profil de CSI-RS à ZP est considérée comme n'étant pas émise ; ou
dans lequel l'UE (800) suppose que seul un profil de CSI-RS à ZP qui n'est pas dans la région de conflit est considéré comme étant émis par la cellule de desserte ; ou
dans lequel la totalité du profil de CSI-RS à ZP est considérée comme n'étant pas valide.

14. Un support lisible par calculateur comprenant des instructions qui, lorsqu'elles sont exécutées par un calculateur, amènent le calculateur à mettre en oeuvre le procédé selon l'une des revendications 11 à 13.

15. Un appareil destiné à une utilisation dans un équipement utilisateur, UE (800), l'appareil comprenant une circuiterie radiofréquence (806) et une circuiterie bande de base (804), dans lequel l'appareil est configuré pour réaliser le procédé selon l'une des revendications 11 à 13.
